# EUROPEAN PATENT APPLICATION

(11) **EP 2 934 027 A1**
(43) Date of publication of application: **21.10.2015**
(21) Application number: 12889813.7
(22) Date of filing: 13.12.2012
(51) Int. Cl.: H04W 4/22, H04W 48/08, H04W 48/16, H04W 48/18

(54) **WIRELESS COMMUNICATION SYSTEM**

(71) Applicant: FUJITSU LIMITED, Kawasaki-shi Kanagawa 211-8588 (JP)
(72) Inventor: KAWAGUCHI, Takahiro, Kawasaki-shi Kanagawa 211-8588 (JP); KAWAI, Hiromitsu, Kawasaki-shi Kanagawa 211-8588 (JP); SHINADA, Yuki, Kawasaki-shi Kanagawa 211-8588 (JP); MASUDA, Katsuyuki, Kawasaki-shi Kanagawa 211-8588 (JP); HAMADA, Yutaka, Kawasaki-shi Kanagawa 211-8588 (JP)
(74) Representative: Ward, James Norman
(86) International application number: PCT/JP2012/082344
(87) International publication number: WO 2014/091596

(57) **Abstract**

A server control device stores, in a storage device, the correspondence relation between a terminal connected to a base station and an access point that may connect to the terminal instead of the base station, and executes a process for transmitting to the access point a terminal acceptance instruction including information used in determination of the possibility of connection to a terminal at the access point based on the correspondence relation according to sending of an emergency call.

## Description

### Technical Field

The present disclosure relates to a wireless communication system.

### Background Art

By development of a wireless communication network in recent years, many users subscribe a service of acquiring information by communication with a wireless communication network using a mobile terminal (also called a wireless terminal). As examples of the wireless communication network, wireless communication systems according to a wireless communication standard of a cellular network in 3GPP (3rd Generation Partnership Project) like GSM (Global System for Mobile Communications), UTMS (Universal Mobile Telecommunications System), (W-CDMA (Wideband Code Division Multiple Access), LTE (Long Term Evolution), or LTE-Advanced, or wireless communication systems according to a wireless communication standard based on IEEE 802.16e (wireless LAN (Local Area Network)) like Wi-Fi (wireless fidelity) or WiMAX (Worldwide Interoperability for Microwave Access) are spreading.

A user owns a mobile terminal (a mobile terminal is simply described as a "terminal" hereinafter) according to the wireless communication standard such as a cellular phone (mobile phone), a smartphone, or a wireless LAN terminal, performs communication in a communication area of each wireless communication network, and may obtain information. In recent years, subscribers of a smartphone having both a cellular phone function (a connecting function to a cellular network) and a wireless LAN terminal function (a connecting function to a wireless LAN) are increasing.

A terminal is usable as a useful tool for promptly acquiring information for recognizing a disaster situation and confirming safety of family members and persons concerned when a disaster such as a typhoon or an earthquake occurs.

### Documents of Prior Art

### Patent Documents

Patent document 1: Japanese Laid-Open Patent publication No. 2007-258851
Patent document 2: Japanese Laid-Open Patent publication No. 2007-143038
Patent document 3: Japanese Laid-Open Patent publication No.2005-39795
Patent document 4: Japanese Laid-Open Patent publication No.2007-74024
Patent document 5: Japanese National Publication of International Patent Application No. 2009-521868
Patent document 6: Japanese National Publication of International Patent Application No. 2012-503410
Patent document 7: Japanese Patent Laid-Open Patent Publication No. 2011-233989
Patent document 8: Japanese Patent Laid-Open Patent Publication No. 2009-267709.

### Summary of the Invention

### Problems to be solved by the Invention

A situation that many users simultaneously try information communication with a certain event as a trigger is possible to occur. For example, in several hours before and after the end of a year, many users simultaneously try communication of telling a simple greeting. Also, when a disaster such as a typhoon or an earthquake occurs, a situation that many users simultaneously try to acquire information for situation confirmation and safety confirmation is possible to occur. Such access to a cellular network by many users causes congestion of the cellular network. The congestion obstructs early information acquisition by users.

In a current cellular network, when a congestion state occurs, a process related to communication such as call origination from a terminal is regulated, and the number of the terminals that execute the process is regulated to a predetermined number. Therefore, in the case that the number of the terminals exceeds the predetermined number, there has been a risk that new call origination is not accepted in the cellular network, and users incapable of securing the communication for obtaining safety information arise.

Also, the decision as to which of a base station for cellular phones and an access point of a wireless LAN a user who owns a smartphone as a terminal connects the terminal to obtain information has been left to the user. It is impossible for the user to recognize an arrangement situation (distribution situation) of the base stations and the access points at a current position and a congestion state of each base station and access point. Therefore, it has been impossible for the user to select a connection destination (one of the base station and the access point) of the terminal with proper assessment of the situation.

An object of the present disclosure is, considering the above-mentioned circumstances, to provide a technique for enabling to perform information exchange using an access point of another wireless communication by a terminal connected with a base station when a disaster or the like occurs.

### Means for solving the Problems

An embodiment of the present invention is a wireless communication system, comprises a base station to which a terminal is connected, an access point of a wireless LAN connected with the terminal instead of the base station when an emergency call is sent, and a server. The base station supplies first information to be used for acceptance by the access point to a terminal connected to the base station according to the sending of the emergency call. The server includes a storage device configured to store a correspondence relation between a terminal connected to the base station and the access point, and a controller configured to execute a process of transmitting to the access point an acceptance instruction of a terminal based on the correspondence relation according to the sending of the emergency call, the acceptance instruction including the first information. The access point performs a connection process with a terminal transmitting the first information, as one of conditions that the first information included in the acceptance instruction is coincident with the first information received from the terminal.

### Effects of the Invention

According to the present disclosure is capable of performing information exchange using an access point of another wireless communication by a terminal connected with a base station when a disaster occurs or the like.

### Brief Description of the Drawings

[FIG. 1] FIG. 1 illustrates a configuration example of a wireless communication system according to an embodiment.
[FIG. 2] FIG. 2 illustrates a configuration example of an access point device (AP) illustrated in FIG. 1.
[FIG. 3] FIG. 3 illustrates a configuration example of a server device for disasters (disaster server) illustrated in FIG. 1.
[FIG. 4] FIG. 4 illustrates one example of a position registration sequence.
[FIG. 5] FIG. 5 illustrates one example of an access point release sequence when a disaster occurs.
[FIG. 6] FIG. 6 illustrates one example of the position registration sequence using the access point device.
[FIG. 7] FIG. 7 illustrates an example of a sequence (a sequence of transmitting ETWS signals through the AP) when an aftershock occurs or the like.
[FIG. 8] FIG. 8 illustrates one example of a safety confirmation sequence (information exchange server utilization sequence) when a disaster occurs.
[FIG. 9] FIG. 9 illustrates one example of an AP restoration sequence after a disaster occurs.
[FIG. 10] FIG. 10 illustrates a configuration example of a wireless communication system in a second embodiment.
[FIG. 11] FIG. 11 is a diagram schematically illustrating the server device for disasters, the access point device and a mobile terminal.
[FIG. 12] FIG. 12 illustrates a distribution example of terminals 5.
[FIG. 13A] FIG. 13A illustrates a stored content example of a position information management database at normal time.
[FIG. 13B] FIG. 13B illustrates a stored content example of the position information management database when a disaster occurs.
[FIG. 13C] FIG. 13C illustrates a stored content example of the position information management database at the time of restoration.
[FIG. 14] FIG. 14 is a flowchart illustrating details of an access point assignment process.
[FIG. 15A] FIG. 15A is an explanatory drawing of the access point assignment process.
[FIG. 15B] FIG. 15B is an explanatory drawing of the access point assignment process.
[FIG. 15C] FIG. 15C is an explanatory drawing of the access point assignment process.
[FIG. 15D] FIG. 15D is an explanatory drawing of the access point assignment process.
[FIG. 16] FIG. 16 illustrates another example of an assignment state to AP#1-AP#4 of the individual terminals 5 (ID "1"-"12") stored in a position information management DB 721 during a fault (failure) of base stations A and B.
[FIG. 17] FIG. 17 illustrates a state when the base station A is restored from a state illustrated in FIG. 16.

### Mode for Carrying out the Invention

Hereinafter, an embodiment of the present invention will be described with reference to the drawings. A configuration of the embodiment is an example, and the present invention is not limited to the configuration of the embodiment.

For an event of obstructing reservation of communication using a terminal when a disaster occurs, the following factors are conceivable.

### (First factor)

When a disaster occurs, it is conceivable that many users simultaneously start communication in the same area. Therefore, in a specific communication infrastructure (for example, a specific base station positioned in the area), it is conceivable that excessive processes for terminals are concentrated and a congestion state occurs. Also, it is possible that the base station undergoes a device failure due to influence of a disaster and falls into a state incapable of connection and communication with the terminals. In this case, it becomes impossible to send signals including ETWS (Earthquake and Tsunami Warning System) signals that are transmitted when an earthquake occurs from the base station to the terminal.

### (Second factor)

An existing wireless LAN system does not have a specification or a function of automatically releasing an access point device for free (putting it in a state allowing connection thereto) when a disaster occurs. Also, the system does not have a specification or a function of automatically restoring the above-described release state to an original state (the state of connecting the terminal tentatively connected to the access point device to an original base station device) as needed. Therefore, even if the access point device is released manually or the like, it is not automatically returned to the original state. Thus, as long as the state that the terminal is connected to the access point device is continued, the user of the terminal is not charged. In the case that the access point device is prepared by a carrier (telephone communication provider) of a cellular network, burdens on the carrier become huge.

### (Third factor)

In wireless LAN communication, a wireless LAN terminal downloads or uploads data in a large size like image data or moving image data from/to an IP (Internet Protocol) network (for example, the Internet) in many cases. In particular, many applications of a smartphone are GUI-based ones, and a large capacity of data is transmitted and received when executing the applications. Under an environment of such wireless LAN communication of transmitting and receiving a large amount of the data in a large size, there is a risk that the communication for safety confirmation in a disaster is obstructed.

In the embodiment, in consideration of the first factor, a state that access of terminals is concentrated at a specific communication infrastructure (a base station, for example) is avoided, and an operation for leveling is performed. Therefore, in the embodiment, a terminal connectable to both a cellular network (carrier network) and a wireless LAN (which is one example of other wireless communication networks) is applied. That is, the terminal has a function capable of switching a connection destination between a base station device and an access point device (sometimes described as an "access point", hereinafter) of a wireless LAN.

A terminal connected to the base station of the cellular network reports position information of the terminal itself (user) to a management server device (sometimes described as a "management server", hereinafter) of a carrier network through the base station. The management server of the carrier network transmits the reported position information of the terminal to a server device for disasters (sometimes described as a "server for disasters" or a "disaster server", hereinafter). The access point of the wireless LAN includes an interface capable of communicating with the management server and the server for disasters in an emergency including the time of a disaster.

The server for disasters has a function of recognizing one or more access points used for distributing loads by changeover from the carrier network to the wireless LAN beforehand on the basis of the position information of the terminal. The management server is capable of converting the position information of the terminal connected to the carrier network from a format managed in the carrier network to a format for management in the server for disasters, and transmitting it to the server for disasters. By providing the server for disasters with such processed position information of the terminal, process loads of the server for disasters may be reduced, and disaster resistance may be improved. The server for disasters may determine assignment of users to one or more access points used for load distribution on the basis of the position information of the terminal provided from the management server.

The server for disasters recognizes a distribution of the access points and the users (terminals) (the correspondence relation between the access points and the terminals) beforehand, from the position information. Thereafter, when a notice (ETWS (Earthquake and Tsunami Warning System) information) of disaster occurrence is generated, a base station device (sometimes described as a "base station", hereinafter) of the carrier network receives signals including the ETWS information, and transmits (broadcasts) an SSID (Service Set Identifier) for AP release to trigger the terminal to switch from the base station to the access point to individual subordinate terminals. The terminal tries the connection to the access point (generates a line establishment request) using the SSID for the AP release. The SSID for the AP release is one example of "first information", "information used for determining the propriety of the connection with the terminal", and "information included in a connection request", and the ETWS information (emergency information) is one example of "second information".

The access point shifts to an attitude of receiving the terminal that has received the SSID for the AP release under control of the server for disasters. That is, the server for disasters, when receiving an instruction to send the SSID for the AP release from the management server, notifies the access point of adjacent terminals to be accommodated by the access point on the basis of the correspondence relation between the terminals connected to the base station and the access points. Receiving the notice, the access point receives the line establishment request of the terminal using the SSID for the AP release and connects the terminal. The terminal connected to the access point leaves the base station. In this way, an accommodating situation of the users in the base station and the access point may be controlled from a carrier network side. Further, in the above-described operation, by controlling the correspondence relation between the terminals and the access points to connect the terminals, the numbers of the users (terminals) to the individual access points are distributed, and the state that the terminals are concentrated at one base station and one access point is avoided.

Also, in the embodiment, in consideration of the second factor, means for releasing/restoring the base station device/access point in an area where a problem is generated by a disaster is provided. By simultaneously monitoring the state of the base station and the state of the wireless LAN, even for restoration after a disaster, by restoring the individual access points in order, automatically stabled restoration means may be provided.

In the case that there is a failure (device failure, link failure) of the base station due to disaster occurrence, the terminals connected to the base station are accommodated in a nearby access point. The terminals accommodated in the access point are returned to the state of being connected to the base station in a predetermined order with the restoration of the base station from a failure state as a trigger. At the time, depending on a restoration situation on a base station side, the target access point for returning the terminals to the state of being connected to the base station may be selected. Charging may be started from the terminal returned to a normal operation.

Also, in the embodiment, in consideration of the third factor, means for executing safety confirmation by a relatively small amount of data communication in a disaster is provided. That is, in the embodiment, the server for disasters has its own Web server function. When a disaster occurs, the access point (AP) for example is controlled so as to be connected to the server's own Web server alone. Thus, an amount of the data communication may be reduced as much as possible. Also, from the position information acquired in the server for disasters, the position information of the user written onto the Web server may be notified to a specific user. Hereinafter, the wireless communication system according to the embodiment will be described further in detail.

### [First Embodiment]

### <System configuration example>

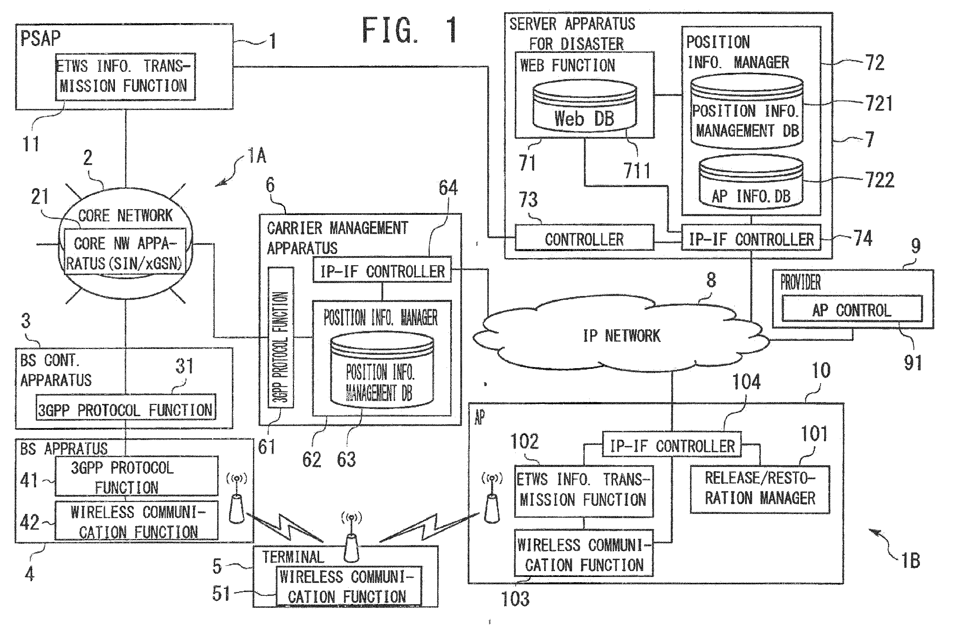

FIG. 1 illustrates a configuration example of the wireless communication system according to the embodiment. FIG. 1 illustrates an example that a 3G system (UMTS) is applied as a wireless communication network (cellular network: carrier network) for cellular phones. However, the cellular networks based on other communication standards like GSM, LTE, or LTE-Advanced may be applied. Also, while an example that Wi-Fi is applied as the wireless LAN is illustrated, other wireless communication standards (WiMAX, for example) may be also applied.

In FIG. 1, the wireless communication system roughly includes a PSAP (Public Safety Answering Point: emergency answering organization), a cellular network (carrier network) 1A, a wireless LAN 1B, an IP (Internet Protocol) network (for example, the Internet) 8, and a server device for disasters (disaster server) 7. A base station controller 3 and a base station device 4 included in the cellular network 1A, a terminal 5, a carrier management device 6, the disaster server 7, a provider (provider device) 9, and an access point device 10 each has an intrinsic address, and may communicate using the address.

### «PSAP»

The PSAP 1 originates an emergency call in an emergency such as a disaster or an accident. The emergency call includes the ETWS (Earthquake and Tsunami Warning System) information (emergency information) for reporting an earthquake/tsunami warning. The ETWS information has a predetermined format. The PSTP 1 may originate the emergency call including the ETWS information by a predetermined ETWS signal sending function 11. The PSTP 1 is connected to a core network 2 of the cellular network 1A and the disaster server 7 through a communication line, and ETWS signals are transmitted to the core network 2 and the disaster server 7.

### «Cellular network»

The cellular network includes the core network 2, the base station controller (called a Radio Network Controller: RNC) 3, and the base station device (called a base station, BTS or Node B (NB)) 4, and the carrier management device 6.

The core network 2 has a connecting function to other backbone networks such as the Internet or an ISDN network, and a connecting function with a mobile phone network and a fixed phone network or the like. The core network 2 includes one or more core network devices (core NW devices) 21 of SIN (Signaling Interworking Node for 3G access) or xGSN (serving/gateway General packet radio service Support Node) or the like. The core network device 21 includes an interface circuit for being connected with an IP-compliant base station controller 3 (IP-RNC) through a communication line, and an interface circuit for receiving the ETWS signals from the PASP 1. Also, for the core network device 21, for example, an existing core network device based on a predetermined communication standard like 3GPP may be applied.

The base station controller 3 is a controller that organizes the base station 4. The base station controller 3 has a 3GPP protocol function 31. The 3GPP protocol function 31 is a 3GPP-based interface for performing communication between the base station controller 3 and each node (for example, the base station 4, the carrier management device 6), and is achieved by an interface circuit for being connected with the base station 4 and the carrier management device 6 through a communication line. Also, for the base station controller 3, an existing base station controller based on a predetermined communication standard like 3GPP may be applied.

The base station 4 is an IP-compliant base station (IP-BTS), forms an area (cell) where the terminal 5 is wirelessly connected, and performs wireless communication with the terminal. The base station 4 has a wireless communication function 41 and a 3GPP protocol function 42.

The wireless communication function 41 performs the wireless communication with the terminal 5. For example, the wireless communication function 41 transmits and receives radio signals including position information based on 3GPP. The 3GPP protocol function 42 is a 3GPP-based interface for communicating with the base station controller 3, and is achieved by an interface circuit for being connected with the base station controller 3 through a communication line. Also, for the base station 4, an existing base station device based on a predetermined communication standard like 3GPP may be applied.

Also, while one base station controller 3 and one base station 4 are illustrated in FIG. 1, actually, the plurality of base station controllers 3 and the plurality of base stations 4 each having the above-described functions are installed.

As the terminal 5, the terminal (for example, a smartphone, a feature phone, or a PDA) having both a function (cellular phone (UE) function) as a connecting terminal (called User Equipment (UE)) to the cellular network 1A and a wireless LAN terminal function is applied. The terminal 5 has a wireless communication function 51. The wireless communication function 51 includes a function of being selectively connectable to the cellular network 1A and the wireless LAN 1B, and a function of transmitting and receiving signals including the position information based on 3GPP and performing wireless LAN communication.

The terminal 5 performs the wireless communication with the base station 4 when connected to the cellular network 1A (base station 4). For example, the terminal 5 includes a UE function module for transmitting and receiving the radio signals including the position information based on 3GPP to/from the base station 4. Also, the terminal 5 includes a wireless LAN connection module (wireless LAN terminal function module) for performing a connection process with the access point device 10 and performing the wireless communication including data when connected to the wireless LAN. The terminal 5 also performs authentication using the SSID or the like when connected to the wireless LAN. Also, the functions of the terminal 5 are the functions that an existing smartphone or feature phone or the like has, and the existing smartphone or feature phone or the like may be applied.

In the embodiment, the terminal 5 receives ETWS Paging signals including the SSID for the AP release from the base station 4. The terminal 5 further includes a function of, in the case that the ETWS Paging signals including the SSID for the AP release are received, turning ON the wireless LAN connection module if it is in an OFF state and executing the wireless LAN connection using the SSID included in the ETWS Paging signals.

When trying the wireless LAN connection, the terminal 5 receives surrounding radio waves, and confirms whether or not the connection is possible with the access point which is a source of the received radio waves. Upon the confirmation, the terminal 5 also checks a security level or the like. In a confirmation process, if the SSID requested by the access point is unknown, the connection is denied by security.

The terminal 5 which has received the ETWS Paging signals checks the SSID for the AP release included in the ETWS Paging signals, and searches the access point connectable by the SSID for the AP release. Thus, the terminal 5 may be connected with the access point that gives a permission to access (connection request: line establishment request) from the terminal 5 using the SSID for the release. The terminal 5 that is connected with the access point may transmit and receive information to/from the access point on condition that an intrinsic identifier (terminal ID) that the terminal 5 has and a terminal ID that the access point has coincide. In the embodiment, to the access point, the terminal ID is supplied from the server for disasters.

The carrier management device (cellular network management device) 6 is a server that manages the cellular network 1A, and may be achieved by application of an exclusive or general-purpose computer (information processor) and an exclusive or general-purpose server machine. The carrier management device 6 includes a 3GPP protocol function 61, a position information manager 62, and an IP-IF (IP network interface) controller 63.

The 3GPP protocol function 61 is a 3GPP-based interface for communicating with the base station controller 6, and is achieved by an interface circuit connected with the core network device 21 of the core network 2 through a communication line.

The position information manager 62 manages the position information of the terminal 5 connected to the cellular network 1A (base station 4) using a position information management database (position information management DB) 63. The position information management DB 63 is a database (DB) that stores the position information of the terminal 5. The position information may include, in addition to the position information of the terminal 5, information of the base station 4 to which the terminal 5 is connected for example. The IP-IF controller 63 is an IP interface (LAN chip, LAN card) having an interface circuit for being connected to the IP network (the Internet) 8.

The disaster server 7 is achieved using an exclusive or general-purpose computer (personal computer (PC), work station (ST) or the like). The disaster server 7 includes a Web function 71, a position information manager 72, a controller 73 that performs an ETWS process (release, restoration control) and AP assignment control, and an IP-IF controller 74.

The Web function 71 has a GUI (Graphical User Interface) engine and a CUI (Character User Interface) engine, and uses a Web database (Web DB) 711 to perform its own Web management (support of an information exchange service (for example, a bulletin board system (BBS), Twitter (R))) that is applied when a disaster occurs. The Web DB 711 is a database that stores data and information for the Web function 71 to perform the Web management.

In the Web DB 711, data for GUI (graphical user interface) and CUI (character user interface) display (data for UI display) is stored. The data for the UI display is provided for (downloaded to) the terminal 5 to utilize the bulletin board system or Twitter provided for the terminal 5 when a disaster occurs. The data for the UI display is the data for display for which an amount of data is reduced as much as possible compared to normal UI by being created on a text basis for example.

The position information manager 72 manages the position information of the terminal 5 received from the carrier management device 6. That is, the position information manager 72 stores the position information of the terminal 5 received from the carrier management device 6 in a position information management DB 721, and manages the terminal 5 using the position information.

Also, the position information manager 72 manages information of the terminal 5 whose connection destination is switched from the cellular network 1A to the wireless LAN 1B in a disaster and information of the connected access point 10, using an access point (AP) information DB 722. The AP information DB 722 may store a correspondence relation between the information (AP information) of the access point 10 switchable from the base station 4 in a disaster and the terminal 5 connected to the access point 10 by a switching process. The information of the terminal 5 includes the terminal ID which is intrinsic identification information of the terminal 5. The AP information includes the SSID for the AP release to be used to accept the terminal 5 by the access point 10 whose utilization is released (which may be utilized without a charge) in a disaster or the like.

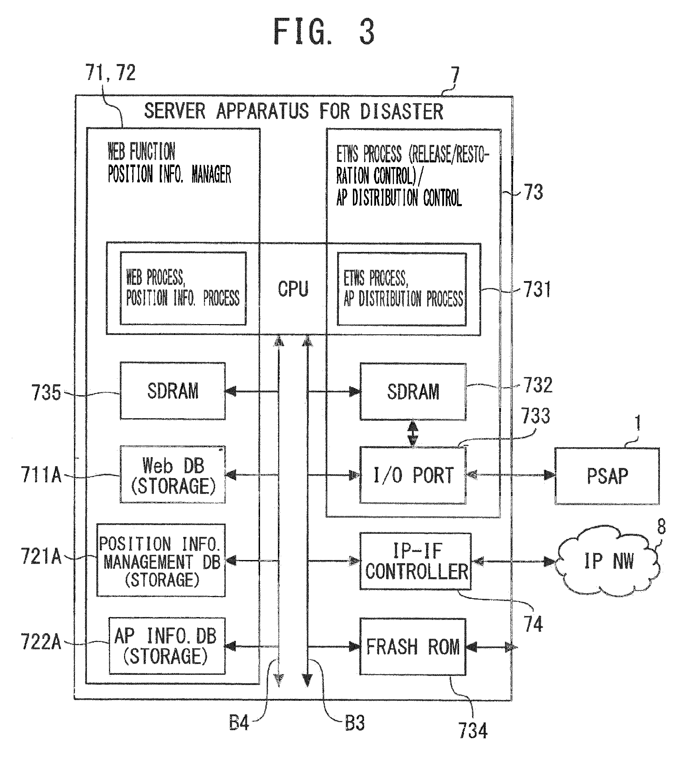

For the SSID for the AP release, a configuration of being statically stored in a storage device (for example, a flash ROM 734, FIG. 3) that the disaster server 7 has may be adopted. Or, a configuration that the disaster server 7 receives the SSID for the AP release transmitted from the core network device 21 through the carrier management device 6 may be also adopted.

For example, in the case that the core network device 21 transmits the SSID for the AP release to the base station controller 3, information (base station ID) of each base station 4 accommodated by the base station controller 3 and the SSID for the AP release are associated and sent to the carrier management device 6. The carrier management device 6 sends the SSID for the AP release and the base station ID through the IP network 8 to the disaster server 7.

In the disaster server 7, for example, in the position information management DB 721, the correspondence relation between the base station 4 and the AP 10 (the base station ID and an ID (AP-ID) of the AP 10 is stored in correspondence. The disaster server 7 (for example, the position information manager 72 or the controller 73) which has received the SSID for the AP release and the base station ID stores the SSID for the AP release corresponding to the base station ID and the AP-ID in the position information management DB 721. The SSID for the AP release is used when releasing the AP.

The controller 73 performs a process of assigning the terminal 5 connected to the base station 4 to a proper access point 10 on the basis of the position information of the terminal 5 stored in the position information management DB 721. Also, the controller 73 instructs a release process and restoration (release state cancellation) of the access point 10 in a disaster. Further, the controller 73 processes the ETWS information that reaches the disaster server 7 through the PSAP 1 or the wireless LAN 1B.

The IP-IF controller 74 is an IP interface (LAN chip, LAN card) having an interface circuit for being connected to the IP network 8. The disaster server 7 is connected with the carrier management device 6, the provider device (provider) 9, and the access point 10 through the IP network 8. Thus, the disaster server 7 may receive the position information from the carrier management device 6, and accept the access to the Web function 71 (bulletin board system, Twitter) from the access point 10.

The provider 9 is a device of a vendor accommodating the access point 10, and operates the access point 10 by performing access point (AP) control 91.

The access point device 10 (described as "AP 10", hereinafter) forms the wireless LAN 1B, and may accommodate the terminal 5 through the connection process. While one AP 10 is illustrated in FIG. 1, actually, two or more APs 10 may be arranged inside a communication area (cell) of the base station 4 or near the cell. The AP 10 is arranged at HOTSPOT (R), for example.

The AP 10 includes a release/restoration manager 101, an ETWS information transmission function 102, a wireless communication function 103, and an IP-IF controller 104. The release/restoration manager 101 performs control of the terminal 5 which is an accommodation target terminal of the AP 10 when a disaster occurs, and force-out control of the terminal 5 which is the accommodation target terminal when performing restoration (when canceling a release state). Further, the release/restoration manager 101 may transmit the ETWS signals through the AP 10 when releasing the AP 10.

The ETWS information transmission function 102 transmits the ETWS information through the AP 10. The wireless communication function 103 is a wireless interface including an interface circuit that performs transmission and reception of signals including the position information based on 3GPP and the wireless LAN communication.

The functions or the processes provided in the PSAP 1, the core network device 21, the base station controller 3, the base station 4, the carrier management device 6 and the terminal 5 illustrated in FIG. 1 may be achieved, for example, by a hardware configuration using an exclusive or general-purpose electric/electronic circuit (for example, an integrated circuit like an IC, an LSI, or an ASIC). Or, some of the functions or the processes may be achieved by, in a processor configuration including a processor (for example, a CPU (Central Processing Unit), a DSP (Digital Signal Processor)), an auxiliary storage device and a main storage device, the processor loading a program stored in the auxiliary storage device onto the main storage device and executing it. Some of the functions or the processes may be also achieved by a programmable logic device (PLD) like an FPGA (Field Programmable Gate Array) or a CPLD (Complex Programmable Logic Device). Further, the functions or the processes may be achieved by a combination using at least two of the hardware configuration, the processor configuration, and the PLD described above.

Also, the position information management DB 63 illustrated in FIG. 1 is created on a storage area of a storage device (storage) that the carrier management device 6 has. Also, the Web DB 711, the position information management DB 721, and the AP information DB 722 that the disaster server 7 has are created on a storage area of a storage device (storage) that the disaster server 7 has.

### «Access point device»

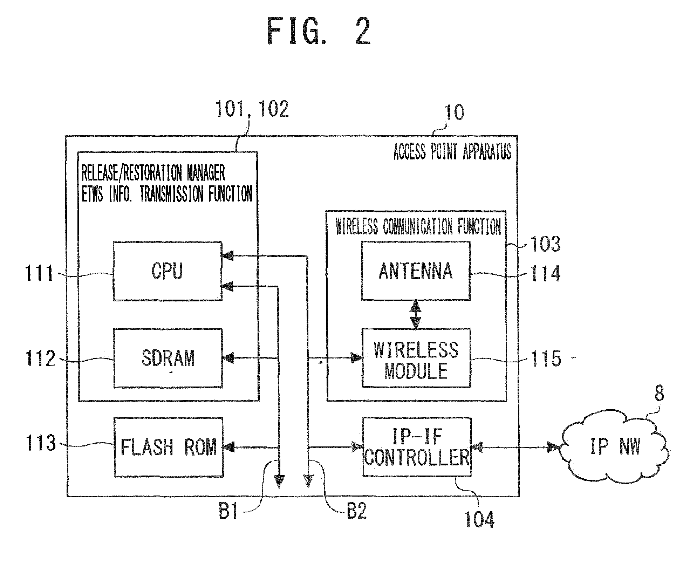

FIG. 2 illustrates a configuration example of the access point device 10 (AP 10) illustrated in FIG. 1. In FIG. 2, the AP 10 includes a CPU 111, an SDRAM 112, and a flash ROM 113 interconnected through a bus B1. Also, the AP 10 includes a wireless module 115 and the IP-IF controller 104 connected with the CPU 111 through a bus B2, and an antenna 114 is connected to the wireless module 115.

The CPU 111 is one example of a processor or a controller, the SDRAM 112 is one example of a main storage device (storage device), and the flash ROM 113 is one example of an auxiliary storage device (storage device). By loading a program stored in the flash ROM 113 onto the SDRAM 112 and executing it, the CPU 111 functions as the above-described release/restoration manager 101, and may achieve the ETWS information transmission function 102.

The antenna 114 and the wireless module 115 achieve the above-described wireless communication function 103. The wireless module 115 is formed by an electric/electronic circuit group forming a down converter and an up converter between an RF (radio frequency) and an IF (intermediate frequency), a signal amplifier, an analog-digital converter, and a digital-analog converter. For example, by the wireless module 115, a generation process of baseband signals and a demodulation process and a decoding process of the baseband signals are performed, and user data from the terminal 5 may be obtained. The CPU 111 generates, for example, an IP packet including the user data. The IP-IF controller 104 generates a LAN frame including the IP packet received from the CPU 111, and sends it out to the IP network 8.

### «Disaster server»

FIG. 3 illustrates a configuration example of the disaster server 7 illustrated in FIG. 1. The disaster server 7 illustrated in FIG. 3 has a hardware configuration in the case of utilizing hardware architecture of a PC. In FIG. 3, the disaster server 7 includes an SDRAM 732, an input/output port 733, the IP-IF controller 74, and the flash ROM 734 that are connected with a CPU 731 through a bus B3.

Further, the disaster server 7 includes an SDRAM 735, a storage (storage device) 711A storing the Web DB 711, a storage (storage device) 721A storing the position information management DB 721, and a storage (storage device) 722A storing the AP information DB 722 that are interconnected with the CPU 731 through a bus B4.

The CPU 731 is one example of a processor (controller), the SDRAMs 732 and 735 are examples of a main storage device, and the flash ROM 734 and the storages 711A, 721A and 722A are examples of an auxiliary storage device. Also, instead of the SDRAMs 732 and 735, one SDRAM may be applied. Also, instead of the storages 711A, 721A and 722A, one or two storages may be applied as well.

The CPU 731 functions as the controller 73 that performs the ETWS process and the AP assignment control by loading a program stored in the flash ROM 734 onto the SDRAM 732 and executing it, for example. The input/output port 733 is connected to the PSAP 1 through a communication line, and may receive the ETWS signals from the PSAP 1 and supply them to the CPU 731. The CPU 731 performs the ETWS process using the ETWS signals.

Also, the IP-IF controller 74 is connected to the IP network 8 through a communication line, and for example, receives the position information of the terminal 5 from the carrier management device 6 and supplies it to the CPU 731. The CPU 731 registers the position information to the position information management DB 721A by functioning as the position information manager 72. Also, the CPU 731 executes an AP assignment process using the position information of the terminal 5 stored in the position information management DB 721A and the AP information stored in the AP information DB 722. Further, the CPU 731 may, in response to an access request for the bulletin board system or Twitter from the terminal 5 received by the IP-IF controller 74, read the data for the UE display stored in the Web DB 711, generate a packet including the data for the UE display, and transmit it to the terminal 5 through the IP-IF controller 74.

<Operation sequence of wireless communication system> In the above-described wireless communication system, roughly, the following five operation sequences are performed. Hereinafter, examples of the individual operation sequences will be described.
(1) Position registration sequence
(2) Access point release sequence upon disaster occurrence
(3) Position registration sequence (access point)
(4) Sequence upon aftershock
(5) Safety confirmation sequence upon disaster occurrence
(6) Access point restoration sequence after disaster occurrence

### <<(1) Position registration sequence>>

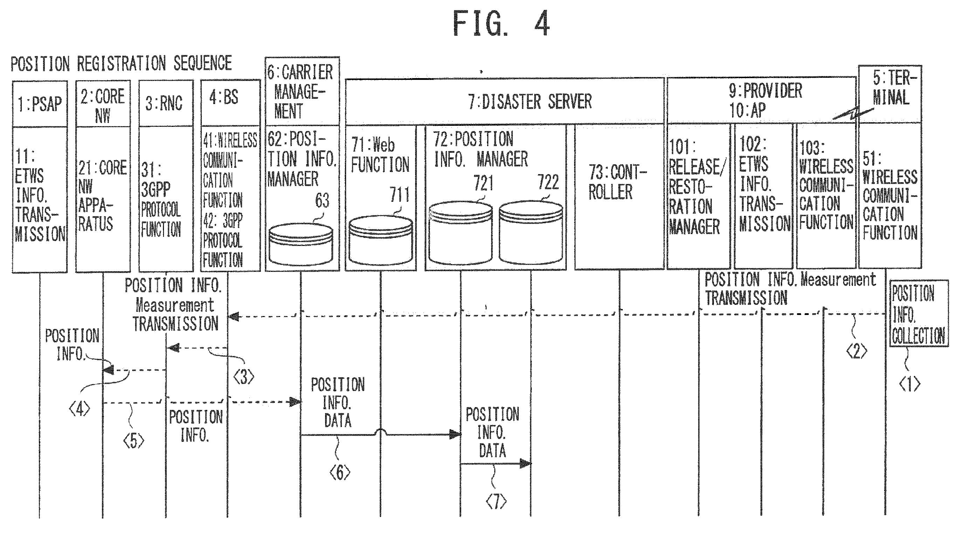

FIG. 4 illustrates one example of the position registration sequence. Broken line arrows in FIG. 4 indicate 3GPP communication (cellular network communication), and solid line arrows indicate IP packet communication or internal communication of a device. In FIG. 4, the terminal 5 connected to the base station 4 acquires the position information of the terminal 5 itself (FIG. 4<1>). The acquired position information is transmitted to the base station 4 by Measurement signals by the wireless communication function 51 (FIG. 4<2>).

The position information is received by the wireless communication function 41 of the base station 4, and transmitted to the base station controller 3 by the 3GPP protocol function 42 (FIG. 4<3>). The base station controller 3 sends the position information to the core network 2 (core network device) 21 by the 3GPP protocol function 31 (FIG. 4<4>). The core network device 21 transmits the position information to the carrier management device 6 (FIG. 4<5>). In the carrier management device 6, the position information manager 62 registers the position information to the position information management DB 63. The position information manager 62 converts (processes) the position information registered in the position information management DB 63 to a format for transmission to the disaster server 7, and sends it to the disaster server 7 as position information data (FIG. 4<6>). The position information data includes identification information (terminal ID) of the terminal 5 connected to the base station 4. In the disaster server 7, the position information manager 72 stores the position information data in the position information management DB 721. The position information data is delivered to the position information manager 72, and registered to the position registration DB 721 (FIG. 4<7>).

As indicated in the above-described position registration sequence, in the wireless communication system of the embodiment, the position information of the terminal 5 (UE) is collected by the Measurement signals and managed in the position information management DB 63 before disaster occurrence. The position information is also registered to the position information management DB 721 inside the disaster server 7. Inside the disaster server 7, as the AP assignment control by the controller 73, mapping of the terminal 5 based on the position information is performed. That is, the controller 73, as the mapping, associates the terminal 5 and the AP 10 to be an assignment destination (allocation destination) for the time of a disaster (calculates allocation prediction), using the position information of the AP 10 of the wireless LAN 1B registered beforehand in the AP information DB 722. A result of the mapping (allocation prediction) is registered to the position information management DB 721.

The mapping is executed for each base station 4. The mapping may be executed with all the terminals 5 connected to one base station 4 as targets. It is because that there is a possibility that the base station 4 becomes incapable of maintaining a proper connection state with the subordinate terminals 5 due to the device failure or link failure of the base station 4 by a disaster.

Of course, for example, in the case that the possibility that the base station 4 falls into a failure state in a disaster is low, distributing loads between the base station 4 and one or more APs 10 is conceivable. In this case, for example, the number of the terminals 5 to maintain the connection with the base station 4 regardless of the release of the AP 10 may be determined as a threshold, and the mapping may be executed to the terminals 5 exceeding the threshold among the terminals 5 connected to one base station 4.

An upper limit may be determined for the number of the terminals 5 to be accepted by one AP 10 when a disaster occurs. The upper limit may be determined in consideration of radio resources to be utilized by the terminals 5 and buffer resources for data transfer, for example. In this case, the plurality of terminals 5 are associated with one, two or more APs 10 so as not to exceed the determined upper limit, in the mapping. In this way, the loads may be distributed among the plurality of APs 10. Also, as described later, the terminal 5 switched to the AP 10 is turned to a state capable of text-basis communication for obtaining information related to a disaster alone. Therefore, the upper limit of a resource amount to be allocated to one terminal 5 may be assumed, and the upper limit may be easily determined.

Also, the above-described position registration sequence is performed at least in the case that the terminal 5 is newly connected to the base station 4. Also, in the case that the terminal 5 leaves the cell of the base station 4 (disconnects the connection with the base station 4), the information of the terminal 5 is deleted from the position information management DB 62 of the carrier management device 6, the information of the terminal 5 is deleted also from the position information management DB 721 of the disaster server 7, and the mapping (correspondence) of the terminal 5 and the AP 10 is updated.

### <<(2) Access point release sequence upon disaster occurrence>>

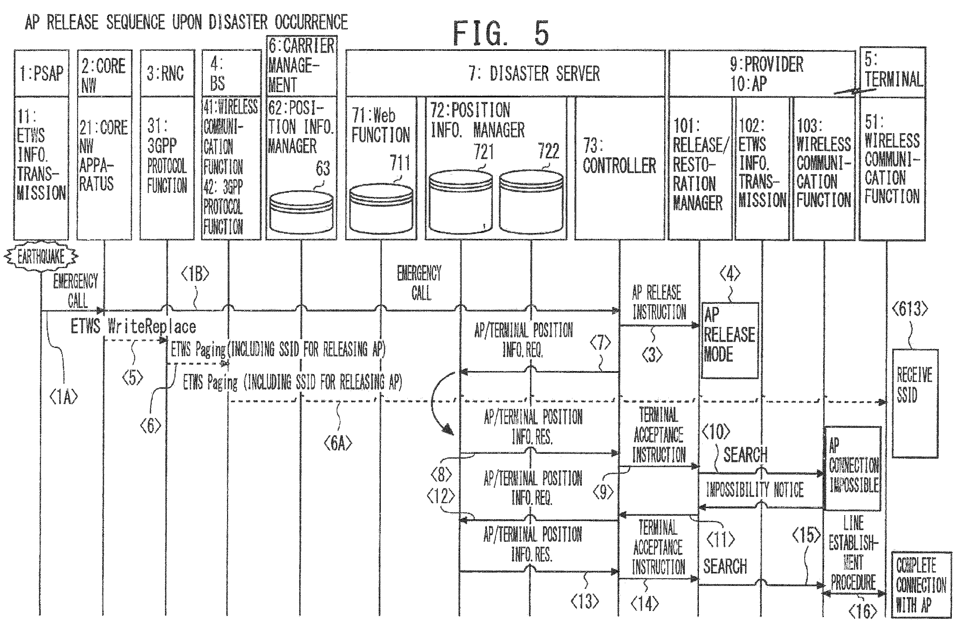

FIG. 5 illustrates one example of the access point release sequence upon disaster occurrence. By disaster (earthquake, for example) occurrence, an emergency call is originated from the PSAP 1 to the core network device 21 (FIG. 5<1A>). The emergency call is also transmitted to the disaster server 7 (FIG. 5<1B>).

In the disaster server 7, the controller 73 generates a message of an instruction to release the AP 10. The AP release instruction is transmitted through the IP network 8 to the AP 10 and the provider 9 (FIG. 5<3>). When receiving the AP release instruction, the provider 9 (provider device) is turned to a state of not executing a charging process for the utilization of the AP 10 using the SSID for the release.

The provider 9 performs the following process as AP control 91. That is, the provider 9 includes a charging server that performs the charging process to the terminal utilizing the wireless LAN. The provider 9 (charging server) receives the information (for example, the SSID and the terminal ID) of the terminal (user) connected with the AP 10 from the disaster server 7 or the AP 10 through the IP network 8, and performs charging (integration of charges).

In the embodiment, the provider 9 receives the AP release instruction from the disaster server 7 through the IP network 8. The AP release instruction includes the SSID for the AP release, and the terminal ID of the terminal 5 capable of utilizing the access point 10 using the SSID for the AP release. The provider 9 which has received the AP release instruction temporarily stops charging for wireless LAN utilization of the terminal (terminal ID) using the SSID for the release.

Specifically, the provider 9 (charging server) receives, as user information related to charging, the SSID, the terminal ID, and charging information (for example, a packet amount). Then, the provider 9 determines whether or not the SSID and the terminal ID included in the user information coincide with the SSID for the AP release and the terminal ID acquired by the reception of the AP release instruction. In the case that the SSID and the terminal ID coincide, the provider 9 does not perform the charging process to the terminal 5 (user) having the terminal ID. Thus, during the AP release, the terminal 5 that utilizes the wireless LAN using the SSID for the AP release may utilize the wireless LAN for free.

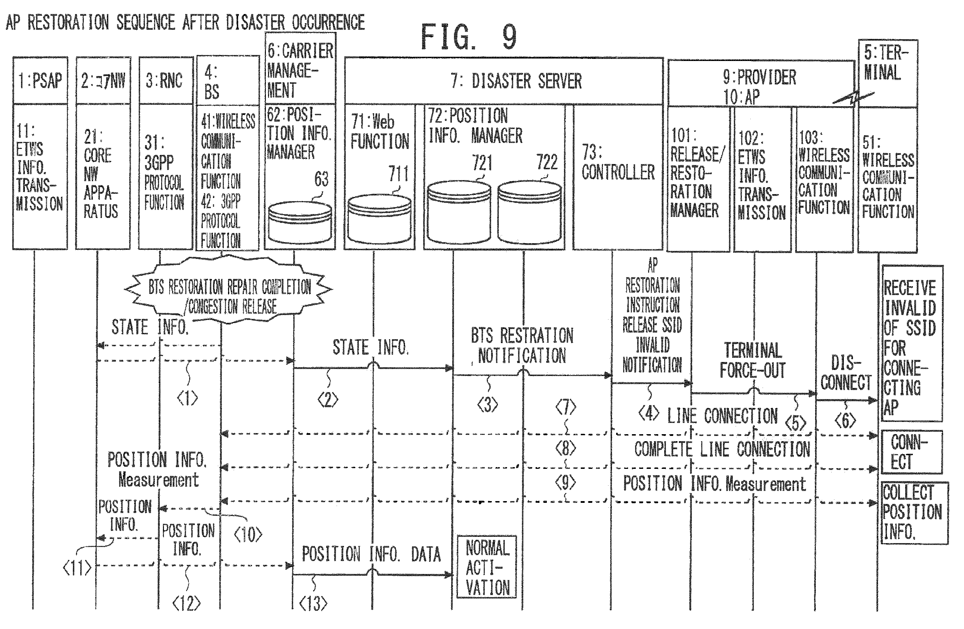

In contrast, in the case of receiving an AP restoration instruction including the SSID for the release and the terminal ID and a release SSID invalidation notice (FIG. 9), the provider 9 restarts charging to the terminal 5 (user) specified by the SSID for the AP release and the terminal ID. The AP restoration instruction is transmitted from the disaster server 7 through the IP network 8 to the provider 9.

Also, regarding the provider 9 (charging server), instead of the above-described configuration, the following configuration may be adopted. For example, the configuration of notifying the SSID for the release alone from the disaster server 7 to the provider 9 may be applied. In this case, the provider 9 determines coincidence/non-coincidence of the SSID in the user information received from the AP 10 and the SSID for the release. When the SSIDs coincides, the provider 9 does not perform (avoids) the charging process to the terminal 5 (user) having the terminal ID in the user information.

Or, the configuration of not transmitting the AP release instruction from the disaster server 7 to the provider 9 may be applied as well. In this case, the provider 9 stores the SSID for the AP release on the storage device beforehand. When receiving the user information related to charging from the AP 10, the provider 9 determines whether or not the SSID in the user information and the SSID for the AP release coincide. In the case that both coincide, the provider 9 avoids the charging process related to the terminal ID in the user information.

On the other hand, in the AP 10 which has received the AP release instruction, the release/restoration manager 101 shifts the AP 10 to an AP release mode (FIG. 5<4>).

Incidentally, the core network device 21 which has received the emergency call stores the SSID for the AP release on the storage device provided in itself, and transmits ETWS WriteReplace signals including the SSID for the release and the emergency information (ETWS information) included in the emergency call to the base station controller 3 (FIG. 5<5>). The base station controller 3 transmits the ETWS Paging signals on which the SSID for the AP release and ETWS indication information (etws-indication) are superimposed to the base station 4 (FIG. 5<6>). Also, in the embodiment, the core network device 21 holds the SSID for the AP release beforehand, however, the configuration of storing the SSID for the AP release beforehand by the base station controller 3 or the base station 4 and including it in the ETWS Paging signals may be adopted. As described later, as the SSID for the AP release, one of an SSID (common ID) that is common among the APs and an intrinsic SSID (intrinsic ID) may be applied. In the case that the common ID is applied, by providing it in a device (for example, the core network device 21) on an upstream side of a transmission route of the ETWS information, troublesomeness of providing the identical common ID in individual downstream side devices may be avoided.

The base station 4 transmits, to the subordinate terminals 5, the ETWS Paging signals on which the SSID for the AP release and the ETWS indication information (etws-indication) are superimposed (FIG. 5<6A>). The terminal 5 may receive the ETWS Paging signals on which the SSID for the AP release and the ETWS indication information (etws-indication) are superimposed from the base station 4, and acquire (receive) the SSID for the AP release (FIG. 5<6B>).

To the "ETWS-Paging signals", the SSID for the AP release and the ETWS indication information (etws-Indication) are imparted. The terminal 5 tries to receive the paging signals intermittently in a predetermined cycle (on a 3GPP specification, 320 msec, 640 msec, 1.28 msec, 2.56 msec or the like may be set for example).

The terminal 5 based on the 3GPP specification starts receiving reporting information including the emergency information (ETWS information (ETWS primary notification, ETWS secondary notification)) in the case of detecting the Paging signals (ETWS-Paging) to which "etws-Indication" is imparted.

According to the 3GPP specification, the first emergency information "ETWS primary notification" is transmitted using reporting information of an SIB 10 (System Information Block Type 10), and the second emergency information "ETWS secondary notification" is transmitted using reporting information of an SIB 11 (System Information Block Type 11) from the base station 4. The ETWS information received from the core network device 21 in the base station controller 3 is transmitted to the base station 4, and the base station 4 provides the terminal 5 with the ETWS information using the above-described reporting information.

Also, the terminal 5 based on the 3GPP specification may execute a reporting process of sounding an alarm or the like when detecting the Paging signals to which "etws-Indication" is imparted.

Instead of the above-described configuration, the base station controller 3 may transmit the ETWS-Paging signals including the ETWS information received from the core network device 21 further in addition to the SSID for the AP release and the ETWS indication information (etws-Indication) as the ETWS signals to the base station 4. In this case, the base station 4 transmits the ETWS signals to the terminal 5, and the terminal 5 acquires the SSID for the release and the ETWS information from the ETWS signals. In this case, a timing at which the terminal 5 acquires the ETWS information may be advanced.

In the 3GPP specification, the ETWS information (etws-information) in the ETWS-Paging signals is optional information (additional information). By detecting (recognizing) the additional information in the ETWS-Paging signals, the terminal 5 may acquire the ETWS information (may distinguish normal Paging signals from the Paging signals including the ETWS information). In the configuration, compared to the case of acquiring the ETWS information from the reporting information, the terminal 5 is expected to acquire the ETWS information in an early stage.

When receiving the SSID for the AP release from the base station 4, the terminal 5 is turned to a state of transmitting the line establishment request including the SSID for the AP release and the terminal ID of the terminal 5 itself to the AP 10.

Here, for the SSID for the AP release, an intrinsic value (intrinsic ID) for each AP may be applied, and a value (common ID) which is common among all the APs to be released may be applied. In the case that the intrinsic ID is used, the terminal 5 transmits a request of connection establishment just to the relevant AP 10 using the intrinsic ID allocated to itself. Therefore, each AP 10 may avoid receiving the request of the connection establishment from unrelated terminals. In other words, the AP 10 may effectively avoid the possibility of generating congestion by processes to the connection establishment requests from many unrelated terminals (a decoding process to the connection establishment request, a transmission process of a denial response, or the like).

In the case that the common ID is used, each AP 10 compares the terminal ID (the ID of the terminal 5 itself) included in the connection establishment request with the terminal ID included in an acceptance instruction received beforehand, and establishes the connection in the case that the terminal IDs coincide. On the contrary, in the case that the terminal IDs do not coincide, the connection of the terminal 5 and the AP 10 is not established. In this way, each AP 10 may avoid the connection establishment with unrelated terminals to which the connection is not allocated.

Also, in the case that the intrinsic ID is used, in an LTE communication system for example, the intrinsic ID of the AP allocated to each terminal is set as an information element subordinate to PagingRecord information which is an information element of Paging information stipulated by 3GPP TS36.331 Sec6.2.2. In contrast, in the case that the common ID is used, in the LTE communication system for example, the common ID is set as an information element immediately under the Paging information stipulated by 3GPP TS36.331 Sec6.2.2.

A specific example of a Paging information element in the case that the intrinsic ID is used and a specific example of the Paging information element in the case that the common ID is used are indicated below. In the following specific examples, various kinds of information related to an authentication system, an encryption system and an authentication key or the like may be acquired from each AP 10 beforehand and stored and managed corresponding to each AP, or may be a common value. Also, the various kinds of information on the authentication system, the encryption system and the authentication key indicated in the following examples may be also included together with the SSID for the release in the acceptance instruction to the AP described above, and transmitted to each AP.

[Table 1]

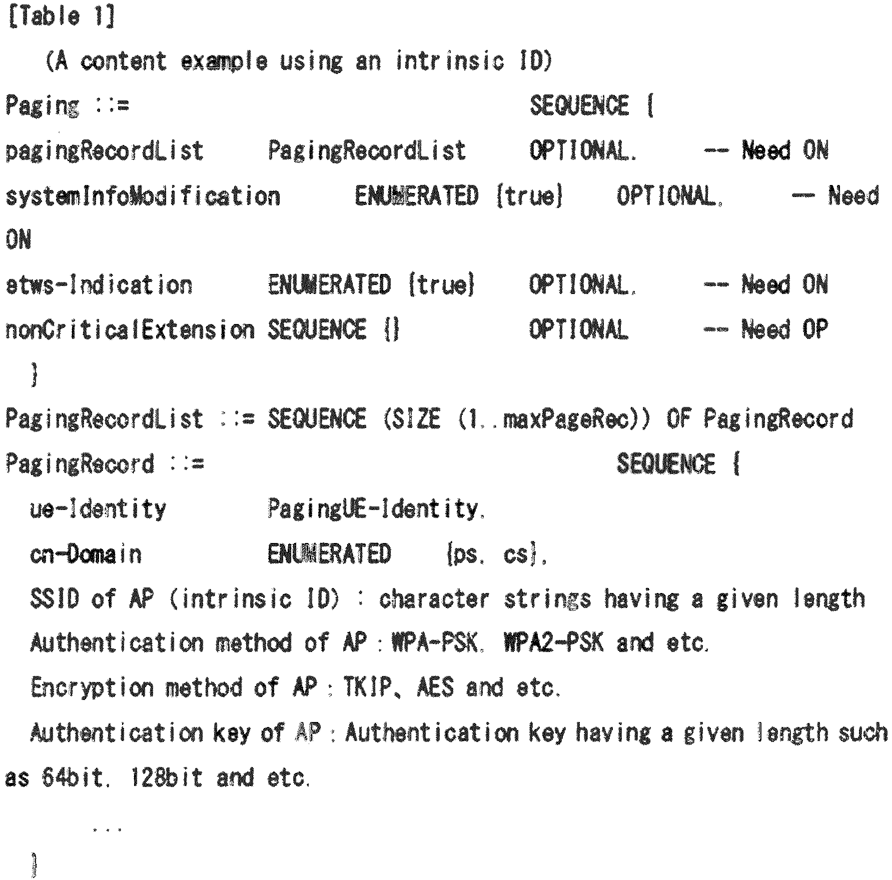

[Table 2]

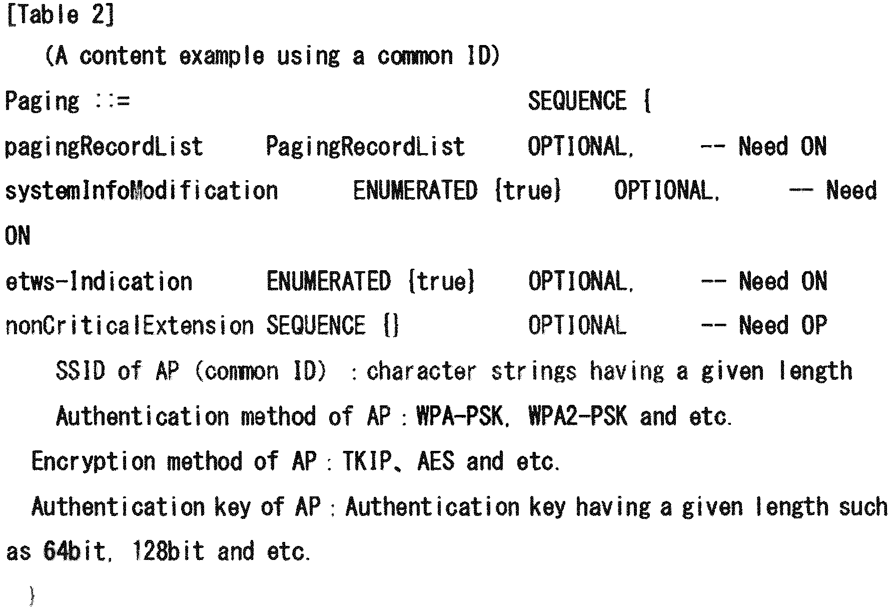

Incidentally, the controller 73 of the disaster server 7 which has received the emergency call requests AP position/terminal position information to the position information manager 72 (FIG. 5<7>). The position information manager 72 returns an AP position/terminal position information response including a mapping result (the correspondence relation between the AP 10 and the terminal 5) and an address of a transmission destination of a terminal acceptance instruction (the address of the AP 10 to be a destination) to the controller 73 (FIG. 5<8>).

The controller 73 generates a terminal acceptance instruction message for instructing acceptance of the terminal 5 to the AP 10 using the correspondence relation between the AP 10 and the terminal 5 included in the AP position/terminal position information response, and transmits it to the AP 10 (FIG. 5<9>). The terminal acceptance instruction message includes, at least, the SSID for the AP release (the common ID or the intrinsic ID), and the terminal ID of at least one terminal 5 that may be accepted. The terminal acceptance instruction message is one example of the acceptance instruction. The SSID for the AP release may be stored in the storage device (for example, the flash ROM 734) beforehand. Or, the disaster server 7 may receive it from the core network device 21 through the carrier management device 6.

Here, for the terminal acceptance instruction, one of transmission (unicast) for which the address of a predetermined AP 10 is a destination and transmission (multicast) for which a group (multicast group) of destination APs 10 is specified may be applied.

In the case that the unicast is applied, the controller 73 transmits the terminal acceptance instruction including the SSID for the AP release (the common ID or the intrinsic ID) and the terminal ID of at least one terminal 5 that may be accepted, specifying the address of the destination AP 10. The destination AP 10 performs an acceptance process of the terminal 5 using the SSID for the AP release and the at least one terminal ID included in the terminal acceptance instruction which has arrived in itself.

In the case that the multicast is applied, the controller 73 transmits the terminal acceptance instruction including the SSID for the AP release (the common ID or the intrinsic ID) and the terminal ID of at least one terminal 5 that may be accepted, specifying a multicast address of the multicast group to which the plurality of predetermined APs 10 belong. The AP 10 belonging to the multicast group performs the acceptance process of the terminal 5 using the SSID for the AP release and the at least one terminal ID included in the terminal acceptance instruction which has arrived. At the time, in the case that the intrinsic ID is used as the SSID for the AP release, the following process is performed. For example, each AP 10 stores the intrinsic ID on the storage device beforehand, and uses, for the terminal acceptance process, the SSID for the AP release that coincides with the SSID for the AP release that is stored beforehand, among the plurality of SSIDs for the AP release included in the terminal acceptance instruction. The multicast is applied, for example, in the case that a suitable communication environment may be provided no matter which of the plurality of APs 10 the terminal 5 is connected to. In the case that the multicast is executed, the time before the terminal 5 is connected to the AP 10 may be shortened compared to the case that terminal acceptance is sequentially instructed by the unicast.

Or, the plurality of intrinsic IDs and identification information (stored beforehand by the individual APs 10) of the APs 10 corresponding to the individual intrinsic IDs are associated and included in the terminal acceptance instruction, and the intrinsic ID that the identification information coincides with is used for the terminal acceptance process. The identification information of the AP 10 may be the one that may be distinguished among the APs 10. For example, for the identification information of the AP 10, the address of the AP 10 or the SSID used at normal time (other than the time of the AP release) may be applied.

Also, in the case of not executing assignment of the plurality of terminals 5 to the plurality of APs 10 (for example, in the case of focusing on force-out from the base station 4), the terminal acceptance instruction including the common ID targeted at all the APs 10 and the terminals IDs of all the terminals 5 that are switching targets may be multicasted or broadcasted.

Also, transmission of the terminal acceptance instruction related to one terminal 5 to one AP 10 may be performed once or separately in a plurality of times. Also, the terminal acceptance for one terminal 5 may be instructed simultaneously to the plurality of APs 10.

The following description of FIG. 5 illustrates an example that the release/restoration manager 101 deduces the corresponding AP 10 by a terminal unit, and transmits the terminal acceptance instruction including one SSID for the AP release and one terminal ID that may be accepted to the relevant AP 10 by the unicast. Of course, the transmission of the terminal acceptance instruction may be also executed by AP unit.

In the AP 10 which has received the terminal acceptance instruction, the release/restoration manager 101 searches the terminal 5 of an acceptance target using the wireless communication function 103 on the basis of the SSID for the AP release included in the terminal acceptance instruction (FIG. 5<10>). The search may be performed depending on whether or not the SSID for the AP release identical to the SSID for the AP release included in the terminal acceptance instruction is included in signals (line establishment request) from a wireless LAN terminal received by the wireless communication function 103. At the time, in the case that the signals including the SSID for the AP release are not received, that is, the terminal 5 of the acceptance target is not found (the connection is impossible), the release/restoration manager 101 sends a terminal confirmation impossibility notice to the controller 73 of the disaster server 7 (FIG. 5<11>).

In contrast, in the case that the line establishment request including the SSID for the AP release is detected by the search, the AP 10 compares the terminal ID included in the detected line establishment request with the terminal ID included in the terminal acceptance instruction. In the case that the terminal IDs do not coincide in a result of comparison, the AP 10 sends the terminal confirmation impossibility notice to the disaster server 7 (FIG. 5<11>). The terminal confirmation impossibility notice may include the SSID for the AP release and the terminal ID included in the terminal acceptance instruction.

The processes <7> to <10> described above are executed in units of the terminal 5 whose position information is registered in the position information management DB 721. In the example of FIG. 5, when the terminal confirmation impossibility notice is received, the controller 73 starts a process for instructing the acceptance to an alternative AP 10 for the terminal 5 related to the terminal confirmation impossibility notice. At the time, the controller 73 may specify the AP 10 that has been incapable of accommodating the target terminal 5 from a source address of the terminal confirmation impossibility notice (the address of the AP 10), for example. The controller 73 which has received the terminal confirmation impossibility notice by the process <11> requests the AP position/terminal position information including the terminal ID in the terminal confirmation impossibility notice and the address of the AP 10 to the position information manager 72 in order to search the alternative AP 10 (FIG. 5<12>), and obtains a response including the relevant AP position/terminal position information from the position information manager 72 (FIG. 5<13>). The response includes the address of the alternative AP 10.

Then, similarly to <9>, the terminal acceptance instruction is transmitted to the corresponding AP 10 (alternative AP 10) (FIG. 5<14>), and the AP 10 searches the terminal 5 (FIG. 5<15>). That is, the AP 10 searches the line establishment request from the terminal 5 including the SSID for the AP release identical to the SSID for the AP release included in the terminal acceptance instruction, and compares the terminal ID included in the line establishment request with the terminal ID included in the terminal acceptance instruction. In the case that the terminal IDs coincide in a result of comparison, the AP 10 executes a line establishment procedure with the terminal 5 (FIG. 5<16>). When AP connection is completed, the terminal 5 cancels the connection with the base station 4. Of course, cancellation of the connection with the base station 4 may be executed before the AP connection is completed.

Also, in the procedure in FIG. 5, the AP 10 may have a configuration that the AP 10 forcibly shifts to a connectable state with a wireless LAN terminal with the reception of the AP release instruction by the AP 10 as a trigger. For example, when the wireless module 115 and the antenna 114 in charge of the wireless communication function 103 are in an operation stop state due to power supply stoppage or the like, in the case that the CPU 111 receives the AP release instruction from the IP-IF controller 104, the CPU 111 starts power supply to the wireless module 115 and the antenna 114, and attains a state capable of the connection (line establishment) with the terminal 5.

Also, for example, in the case that the number of the terminals 5 whose position information is registered in the position information management DB 721 is smaller than a predetermined threshold (there is a margin in the number of the terminals 5 connected to the base station 4), the controller 73 may transmit an operation stop instruction to the AP 10. The CPU 111 which has received the operation stop instruction stops the power supply to the wireless module 115 and the antenna 114 so that the terminal 5 continues the connection with the base station 4.

Also, in the case that the number of the terminals 5 whose position information is registered in the position information management DB 721 is smaller than the predetermined threshold (there is a margin in the number of the terminals 5 connected to the base station 4), the controller 73 may apply the configuration of not transmitting the AP release instruction including the terminal ID of a specific terminal 5 to the AP 10. In this case, since the AP 10 is not provided with the terminal ID, in the line establishment request from the terminal 5, even when the SSID for the release coincides, the terminal ID does not coincide. As a result, the terminal 5 maintains the connection state with the base station 4 without being able to be connected to the AP 10.

In the AP release sequence upon disaster occurrence described above, the base station controller 3 transmits the ETWS-Paging signals including the SSID for the AP release to the base station 4 with the reception of an emergency call as a trigger.

In the case that the AP release is to be executed, the ETWS-WriteReplace signals including the SSID for the AP release and the ETWS information are transmitted to the base station controller 4, and the ETWS-Paging signals including the SSID for the AP release are transmitted to all the terminals 5 connected to the base station 4. Thus, the individual terminals 5 may acquire the SSID for the AP release. Also, the individual terminals 5 may acquire the ETWS information from the reporting information or the ETWS-Paging signals.

Also, the controller 73 of the disaster server 7 transmits a release instruction to the AP 10. The AP 10 which has received the release instruction searches the peripheral accommodatable terminal 5 and tries to establish a line. By the search, the AP 10 may receive the signals (line establishment request) from the terminal 5 requesting the line connection using the SSID for the AP release. In the case that the received signals from the terminal 5 include the terminal ID included in the terminal acceptance instruction, the AP 10 performs the line establishment procedure with the terminal 5 and secures a communication band.

If the terminal 5 instructed by the terminal acceptance instruction is not found, accommodation of the terminal 5 may be instructed to the alternative AP 10 (adjacent different AP 10). In the case that the line with the terminal 5 is disconnected due to movement of the terminal 5 or the like, a terminal disconnection notice (including the SSID for the AP release and the terminal ID) is transmitted from the AP 10 to the disaster server 7. In this case, the disaster server 7 performs a process similar to the one when the terminal confirmation impossibility notice is received, and may transmit the terminal acceptance instruction to the alternative AP 10 (for example, the adjacent different AP 10).

### <<(3) Position registration sequence (access point)>>

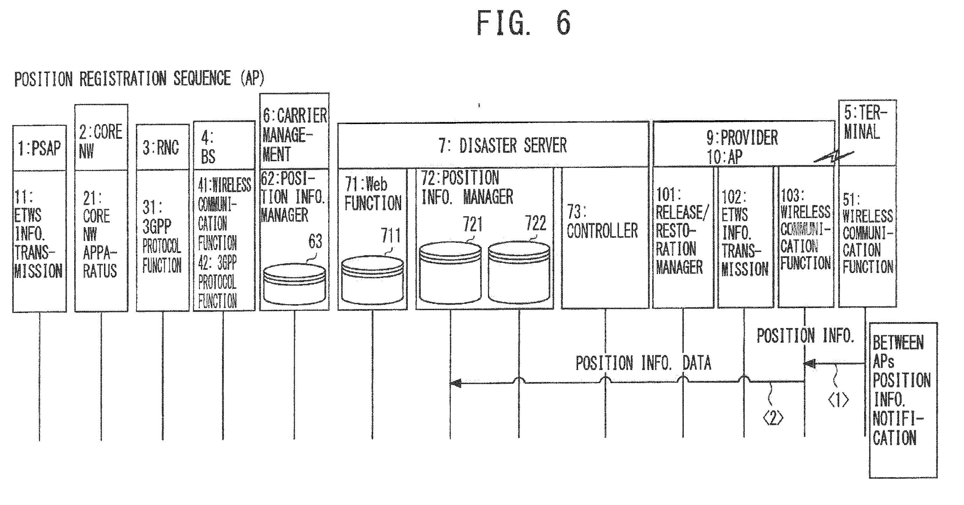

FIG. 6 illustrates one example of the position registration sequence of the terminal 5 using the AP 10. In FIG. 6, the terminal 5 transmits the position information to the AP 10 at least once (for example, in the line establishment procedure) (FIG. 6<1>). The position information may include the terminal ID, the address of the terminal 5, the position information (x/y coordinates) of the terminal 5, and the identification information of the AP 10.

When the position information is received, the AP 10 generates a packet including the position information, and transmits the packet (position information data) through the IP network 8 to the disaster server 7 (FIG. 6<2>). In the disaster server 7, the position information data is stored in the position information management DB 721 by the position information manager 72. Also, the disaster server 7 may receive a source address of the packet including the position information as specific information of the AP 10 to which the terminal 5 is connected. In this way, for each AP 10 registered in the AP information DB 722, the information of the terminals 5 connected with the individual APs 10 by the AP release is managed. Also, the position registration of the terminal 5 using the AP 10 may be executed at an appropriate timing as needed.

Also, the first position information data is handled as a notice indicating a success of the line establishment procedure in the disaster server 7. That is, the disaster server 7 may recognize the connection (line establishment) of the terminal 5 and the AP 10 by receiving the position information data. Of course, prior to the position registration, after the procedure of FIG. 5<16> for example, the notice indicating the line establishment success may be transmitted to the disaster server 7.

### <<(4) Sequence upon aftershock»

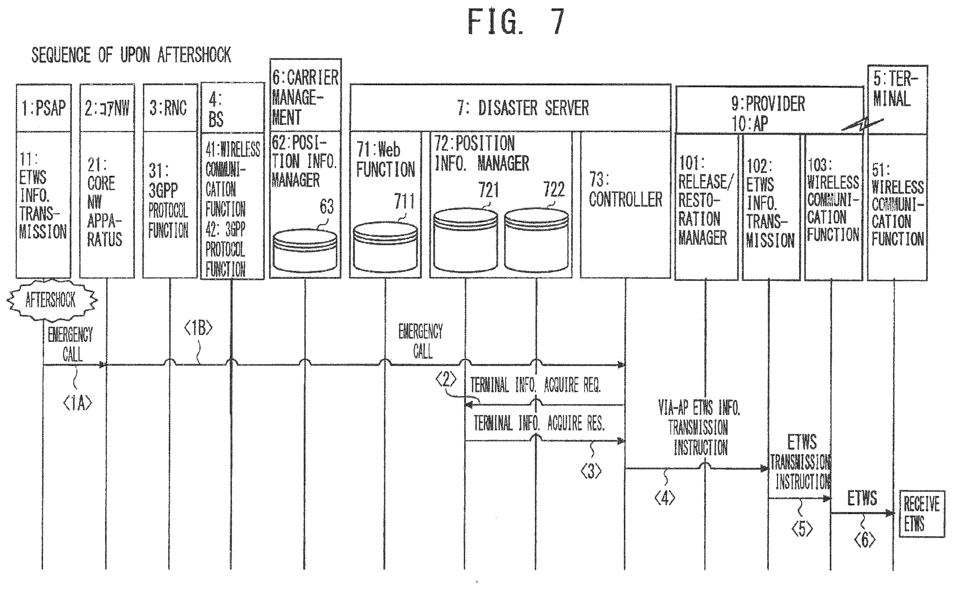

FIG. 7 illustrates an example of the sequence upon an aftershock (the sequence of transmitting the ETWS information (emergency information) through the AP). An emergency call (including the ETWS information) is originated from the PSAP 1 every time an earthquake occurs. Therefore, after the occurrence of an earthquake, every time an aftershock of the earthquake occurs, an emergency call (including the ETWS information) is originated from the PSAP 1. The emergency call is received by the core network device 21 (FIG. 6<1A>). The emergency call is also received by the disaster server 7 (FIG. 6<1B>).

In the disaster server 7 which has received the emergency call (ETWS information), the controller 73 inquires of the position information manager 72 the information of the terminal 5 to transmit the ETWS information (FIG. 7<2>: terminal information acquisition request). The position information manager 72 refers to the position information management DB 721, reads the information of the terminal 5 whose position is registered, and returns it to the controller 73 (FIG. 7<3>: terminal information acquisition response).

The controller 73 generates the packet including the ETWS information, sets the address of the terminal 5 included in the information of the terminal 5 obtained from the position information manager 72 to the packet, and sends it out to the IP network 8 (FIG. 7<4>: via-AP ETWS information transmission instruction).

In the AP 10 which has received the packet (via-AP ETWS information transmission instruction), the ETWS information transmission process 102 is executed, and the baseband signals including the ETWS information are given to the wireless communication function 103 (wireless module 115) (FIG. 7<5>: ETWS transmission instruction). The wireless communication function 103 (wireless module 115) generates RF signals including the ETWS information and transmits them from the antenna 114 (FIG. 7<6>: ETWS transmission).

By the sequence illustrated in FIG. 7, the terminal 5 may receive the ETWS information which is receivable when the base station 4 is connected via the AP 10 even after switching to the AP 10. That is, while the line with the AP 10 is maintained, the ETWS information to be notified when an aftershock occurs or the like is notified from the AP 10 to the terminal 5 through the disaster server 7.

### <<(5) Safety confirmation sequence upon disaster occurrence>>

The terminal 5 connected to the AP 10 may utilize the information exchange service like the bulletin board system and Twitter (R) using the data for the UI display prepared in the disaster server 7, by utilizing the Web function 71 of the disaster server 7. A user of the terminal 5 may utilize the information exchange service for safety confirmation.

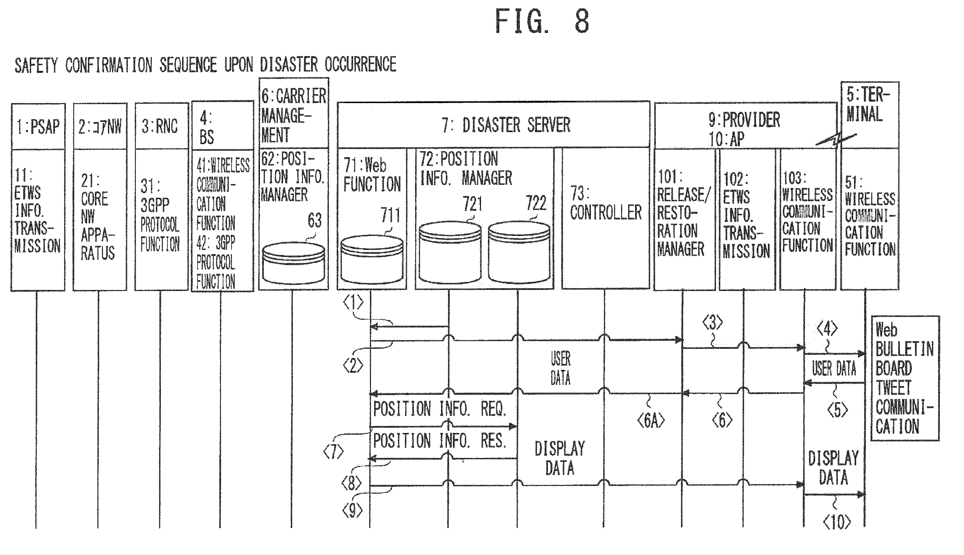

FIG. 8 illustrates one example of the safety confirmation sequence (information exchange service utilization sequence) upon disaster occurrence. For example, the position information manager 72 of the disaster server 7 gives a URL provision request for the terminal 5 to the Web function 71 with the position registration of the terminal 5 to the position information management DB 721 as a trigger (FIG. 8<1>).

The Web function 71 generates the packet including an address (URL (Uniform Resource Locator)) of an information exchange service site such as the bulletin board system or Twitter (R) supported by the Web function 71, and sends the packet through the IP network 8 to the AP 10 accommodating the terminal 5 (FIG. 8<2>).

In the AP 10 which has received the packet, for example, the release/restoration manager 101 uses the wireless communication function 103, and sends signals including the URL in the packet to the terminal 5 (FIG. 8<3>, <4>). Also, the release/restoration manager 101 stores the URL in a predetermined storage device (for example, a nonvolatile memory (the flash ROM 734)).

A processor (for example, a CPU) provided in the terminal 5 performs the following process by executing a program (an application to be used upon a disaster by the terminal 5 (an application for the time of a disaster, for example. It does not have to be a specialized application as long as equivalent operations are possible)) stored in a storage device provided in the terminal 5. That is, when the URL is received, the processor of the terminal 5 registers the URL to the application for the time of a disaster. Thereafter, when an access operation to the registered URL is performed by a user, user data is transmitted to the AP 10 (FIG. 8<5>).

The user data includes the URL of an access destination, and in the AP 10, the release/restoration manager 101 checks the URL. In the case that the URL is not the same as the URL (specific URL) for the information exchange service site registered in the flash ROM 734, the user data is not transferred to the IP network 8. Thus, in the terminal 5, timeout of Web access occurs, resulting in an error.

In this way, in the case that the URL of a Web site that the terminal 5 tries to access is not the specific URL, the access to the Web site is interrupted by the AP 10. In contrast, in the case that the URL included in the user data is the same as the specific URL, the packet including the user data is generated and transmitted through the IP network 8 to the disaster server 7 (FIG. 8<6A>) .

In the disaster server 7, the user data is received by the Web function 71. The Web function 71 sends a position information request, and inquires of the position information manager 72 the information of the terminal 5 which has transmitted the user data (FIG. 8<7>).

The position information manager 72 reads the information of the terminal 5 according to the position information request from the position information management DB 721, and returns a position information response including the read information to the Web function 71 (FIG. 8<8>).

When the user data is an access request to the information exchange service site, the Web function 71 reads the data for the UI display (display data) of the information exchange service site according to the access request from the Web DB 711, and generates and transmits a packet for the terminal 5 including the display data (FIG. 8<9>). The packet is received by the AP 10, and the AP 10 transmits the display data to the terminal 5.

In the terminal 5, A web browser executed by the CPU displays a Web page of the information exchange service site using the display data on a display not illustrated in the figure. A user of the terminal 5 may exchange information including the safety confirmation with persons concerned using the information exchange service site, by inputting information using the web page.

The display data is created on the text basis for example, and an amount of data is suppressed compared to a general Web site using images and moving images. Therefore, since an amount of communication data related to the AP 10 is reduced, overloading the AP 10 by utilization of the information exchange service site may be avoided, and influence on the communication between the AP 10 and the other terminals may be avoided.

Also, by URL check in the AP 10, the terminal 5 is turned to a state that an accessible Web site is limited to the information exchange service site. By such limitation, influence on the communication of the other terminals 5 by transmission and reception of a large amount of data through free Web access of the terminal 5 may be avoided. A process related to Web access limitation (access denial except for a specific site) may be executed in the terminal 5 by setting of the Web browser in the terminal 5 for example.

However, a configuration related to the Web access limitation described above may be omitted. In the case that the configuration related to the Web access limitation is omitted, for example, the URL of the information exchange service site is registered (bookmarked) beforehand in the Web browser of the terminal 5 or the application for the information exchange service site. In this case, a user of the terminal 5 connected to the AP 10 may access the information exchange service site using a bookmark.

### <<(6) Access point restoration sequence after disaster occurrence»

FIG. 9 illustrates one example of the AP restoration sequence after disaster occurrence. In FIG. 9, when a state that a predetermined restoration condition in the base station 4 is satisfied is attained, state information indicating a restoration state is transmitted from the base station 4. The state information reaches the carrier management device 6 through the base station controller 3 and the core network 2 (FIG. 9<1>). The carrier management device 6 sends the state information through the IP network 8 to the disaster server 7 (FIG. 9<2>). Examples of the restoration condition are the restoration from a failure state of the base station 4, the restoration from a congestion state of the base station 4 (congestion state cancellation), the number of the terminals 5 connected to the base station 4 being smaller than the predetermined threshold, or the like.

In the disaster server 7 which has received the state information, the position information manager 72 reads the information related to one terminal 5 (information of the terminal 5 and the AP 10) from the position information management DB 721, and sends a BTS restoration notice including the information of the terminal 5 and the AP 10 to the controller 73 (FIG. 9<3>). When the BTS restoration notice is received, the controller 73 generates a packet for the AP 10 including the AP restoration instruction and the AP release SSID invalidation notice related to the terminal 5, and transmits it to the AP 10 using the information of the AP 10 (FIG. 9<4>). The AP restoration instruction and the AP release SSID invalidation notice include at least the SSID for the AP release to be invalidated, and the terminal ID of the terminal 5 which is a force-out target. The AP restoration instruction and the AP release SSID invalidation notice are examples of a force-out instruction including an invalidation notice of the first information.

In the AP 10 which has received the packet, the release/restoration manager 101 uses the wireless communication function 103 to perform the force-out process to the terminal 5 connected to the AP 10 using the SSID for the AP release included in the AP release SSID invalidation notice (FIG. 9<5>). That is, the release/restoration manager 101 invalidates the SSID for the AP release related to the terminal 5 as the force-out process. Thus, the wireless terminal function 103 disconnects the line with the terminal 5 (FIG. 9<6>).

The AP restoration instruction and the AP release SSID invalidation notice are also transmitted from the disaster server 7 to the provider 9 (charging server). The provider 9 (charging server) which has received the AP restoration instruction and the AP release SSID invalidation notice cancels a temporary charging process stop state for the terminal 5 specified by the SSID for the AP release and the terminal ID, and restarts the charging process to the terminal 5.

When disconnected from the AP 10, the terminal 5 receives reporting signals from the base station 4, and starts a connection procedure (line connection process) to the base station 4 (cellular network) (FIG. 9<7>). When the line connection process of the terminal 5 and the base station 4 is completed, a line connection completion notice is transmitted from the base station 4 to the terminal 5 (FIG. 9<8>). The terminal 5 transmits the position information of itself to the base station 4 by a Measurement message (FIG. 9<9>).

The following operations are the same as the ones before disaster occurrence. That is, the position information is transmitted from the base station 4 to the base station controller 3, and transmitted through the core network 2 to the carrier management device 6 (FIG. 9<10>, <11>, <12>). The carrier management device 6 generates the position information data and sends it to the disaster server 7 (FIG. 9<13>), and in the disaster server 7, the position information manager 72 registers the position information data to the position information management DB 721.

The above-described restoration sequence may be executed under the following situation. That is, it is executed at a timing of using the information indicating the restoration situation of the base station 4. Whether or not the base station 4 has restored is determined depending on whether or not the base station 4 has returned to a normal process. That is, in the case that the base station 4 falls into the failure state or the congestion state due to disaster occurrence, a state of being incapable of registering the position information to the carrier management device 6 (non-registerable state) or a state of needing time for registration (delay state) starts. Update of the position information management DB 721 of the disaster server 7 is executed with update of the position information management DB 63 of the carrier management device 6 as a trigger. Therefore, when the carrier management device 6 is turned to the position information non-registerable state or the delay state, the disaster server 7 is similarly turned to the non-registerable state or the delay state. For example, in the case that a difference between the time of a time stamp to the position information and the current time exceeds a threshold (time) to be considered as being normal (not delayed), the delay state is determined.

When the base station 4 is turned to a state of performing the normal process, the non-registerable state and the delay state in the carrier management device 6 are cancelled. The position information manager 72 of the disaster server 7 monitors an updating situation of the position information management DB 721. Then, in the case that the situation of the non-registerable state or the delay state for the position information of the terminal 5 from a certain base station 4 is shifted to the situation that the position information is normally updated in a range without a delay, the position information management manager 72 may determine that the base station 4 has restored. In the case that such a determination is made, the operations of <3> and thereafter illustrated in FIG. 9 are performed.

The force-out process of the terminal 5 from the AP 10 is executed in units of the AP. Of course, it may be executed for each terminal 5 in units of the AP. By execution in units of the AP, compared to the case of returning the terminals 5 of the plurality of APs to the connection state to the base station 4, the concentration of the line connection requests from the terminals 5 to the base station 4 is avoided. Thus, sudden load application to the base station 4 may be avoided. However, the process of returning the terminals 5 connected to the plurality of APs 10 to the connection state to the base station 4 may be executed temporarily.

### [Second Embodiment]

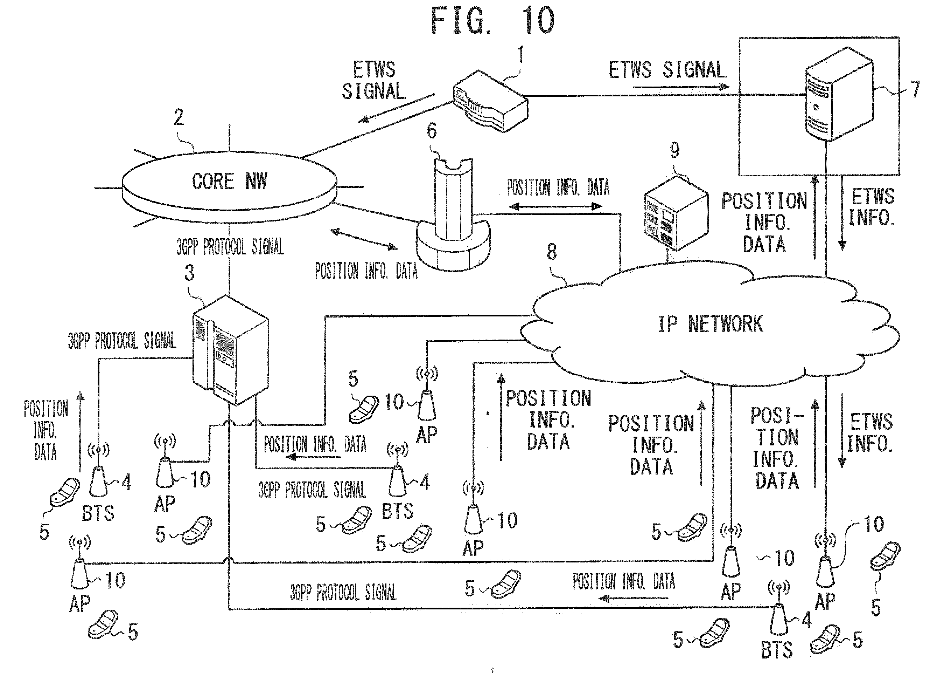

Next, the wireless communication system according to the second embodiment will be described. Since the second embodiment has features that are in common with the first embodiment, the same signs are attached and descriptions of the common features are omitted. FIG. 10 illustrates a configuration example of the wireless communication system in the second embodiment. The configuration of the wireless communication system illustrated in FIG. 10 is similar to the configuration of the wireless communication system in the first embodiment illustrated in FIG. 1. However, in FIG. 10, the plurality (three, in FIG. 10) of the base stations 4 (BTSes) are illustrated for the base station controller 3 (RNC), and the plurality (six, in FIG. 10) of APs 10 connected to the IP network 8 are illustrated.

### <Configuration>

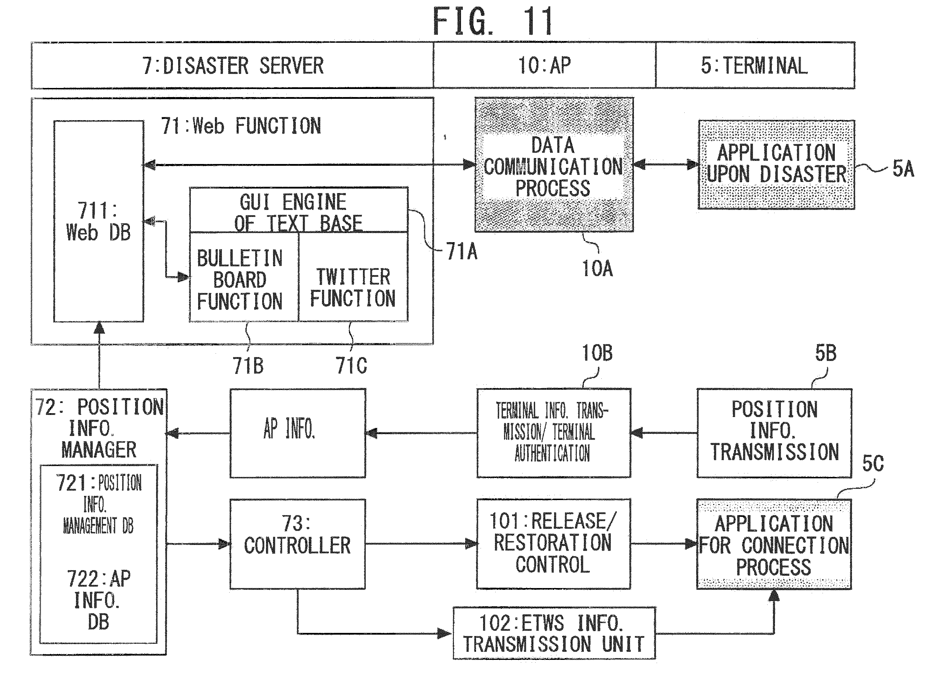

FIG. 11 is a diagram schematically illustrating the disaster server 7, the AP 10 and the terminal 5. In FIG. 11, the disaster server 7 includes the Web function 71, the position information manager 72, the controller 73 that performs the ETWS process unit (release, restoration control) and the AP assignment control, and the IP-IF controller 74.

The Web function 71 has a text-basis GUI and CUI engine 71A, and supports a bulletin board system function 71B and a Twitter function (tweet function) 71C. The AP 10 performs the process for limiting the Web access of the terminal 5 to the information exchange service site provided in the disaster server 7, as described using FIG. 8, as a data communication process 10A. The terminal 5 has an application 5A to be used in the case of being connected to the AP 10 by the switching process as the application for the time of a disaster. The application 5A may be a general-purpose application (a Web browser, for example), or may be an exclusive application. The application 5A is a function achieved by the execution of the program by the processor (CPU) provided in the terminal 5A. By Web access limitation, a communication amount of the AP 10 may be suppressed.

For example, data of the bulletin board system or Twitter (R) generated using the application 5A is sent as the user data to the disaster server 7 by the data communication process 10A of the AP 10. In the disaster server 7, the user data is received by the Web function 71. The Web function 71 controls the bulletin board system function 71B and the Twitter function 71C according to contents of the user data. The Web function 71 transmits a processing result of the bulletin board system function 71B or the Twitter function 71C to the terminal.

Also, the terminal 5 has a position information transmission function 5B, and the AP 10 has a terminal information transmission function and terminal authentication function 10B. The AP 10 checks the SSID obtained from the terminal 5 using the terminal authentication function, and does not perform the line establishment procedure of the terminal 5 when the SSID is not the SSID for the release. Also, the position information transmitted by the terminal 5 using the position information transmission function 5B is transmitted to the disaster server 7 using the terminal information transmission function in the AP 10. At the time, to terminal information, the AP information (the information of the AP 10 to which the terminal 5 is connected) is set. The terminal information and the AP information are stored in the position information management DB 721 by the position registration manager 72.

Also, the terminal 5C has an application 5C for the connection process to the AP of the wireless LAN. The application 5C performs the connection process (line establishment process) with the AP 10 using the SSID for the release, and a line disconnection process accompanying the invalidation of the SSID for the release. Also, by the application 5C, the ETWS signals are received from the AP 10.

Also, the functions of the disaster server 7 and the AP 10 illustrated in FIG. 11 may be achieved by the hardware configuration illustrated in FIG. 2 and FIG. 3. The terminal 5 may have the hardware configuration similar to the AP 10 (see FIG. 3), for example. By the execution of the program stored in the auxiliary storage device by the CPU, the function of the application 5A (a browsing function of the bulletin board system and Twitter, an information input and origination function to the bulletin board system and Twitter), the position information transmission function 5B, and the connection process based on the application 5C may be achieved.

### <<Assignment algorithm of AP>>

Next, assignment algorithm of the AP will be described. A process of assigning the plurality of terminals 5 to the plurality of APs 10 is performed as follows.
(1) On the basis of the position information of the terminal 5 and field intensity, the AP 10 from which the terminal 5 may receive radio waves is mapped by the controller 73 of the disaster server 7.
(2) There is a possibility that the connection of the terminals 5 is concentrated at the AP 10 having many terminals 5 that may receive the radio waves. Therefore, the controller 73 selects and averages the terminals 5 receiving the radio waves from the plurality of APs 10.
(3) Averaging is performed by notifying, from the disaster server 7, the terminal IDs of the terminals 5 to be accommodated in the individual APs 10.
(4) In the case of receiving the connection request from the terminal 5 having the notified terminal ID, the AP 10 performs the connection process on condition that the SSID for the release coincides.
(5) In the case that the AP 10 is incapable of receiving the connection request from the terminal 5 whose terminal ID is notified, there is a possibility that the target terminal 5 has moved or the radio waves from the terminal 5 are not suitably received due to an obstacle or the like. In this case, the AP 10 transmits a connection instruction to an adjacent AP 10 which is a different candidate.
(6) The restoration is executed in units of the AP 10, and sudden overloading of the base station 4 is avoided.

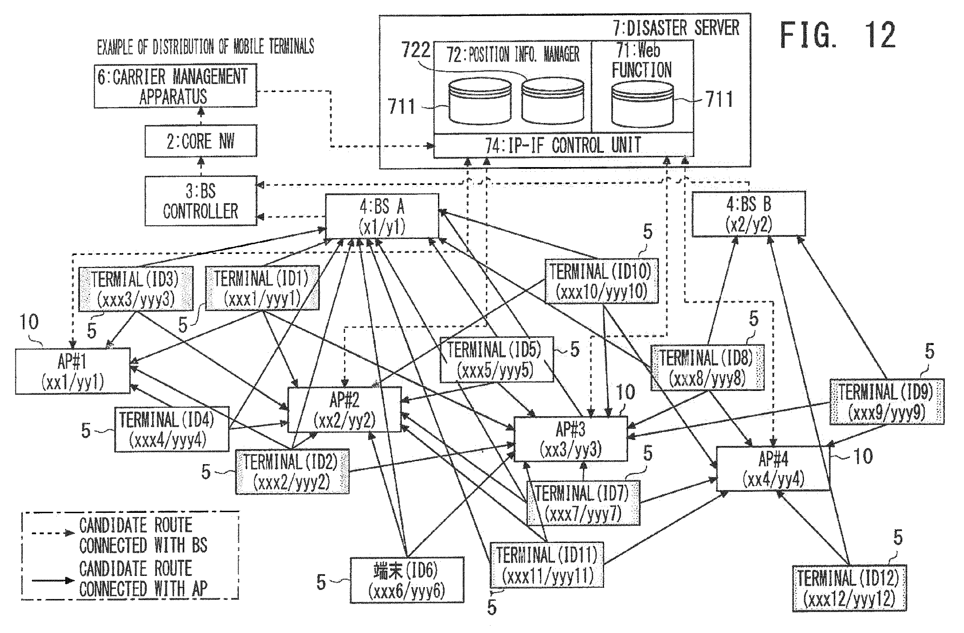

FIG. 12 illustrates an example of a distribution of the terminals 5 and access candidate routes. In the example illustrated in FIG. 12, to the base station controller 3, a base station A and a base station B are connected as the two base stations 4. Also, as the plurality of APs 10, flour AP#1-AP#4 are illustrated. Further, as the plurality of terminals 5, 12 pieces of the terminals 5 (terminals ID"1"-ID"12": described as "terminals ID1-ID12" hereinafter) are illustrated.

In FIG. 12, the individual terminals ID1-ID12 may be connected to the base station 4 and the AP 10 from the respective positions as follows. Specifically, the terminals ID1-ID7, the terminal ID10 and the terminal ID11 may be connected to the base station A on the basis of the respective positions. The terminal ID9 and the terminal ID 12 may be connected to the base station B on the basis of the respective positions. The terminal ID8 may be connected to one of the base station A and the base station B on the basis of the position.

On the other hand, the terminal ID1 may be connected (access) to the AP#1, the AP#2, or the AP#3. A route indicating the AP (connection candidate) that the terminal ID1 may be connected like this becomes the access candidate route to the AP. On the contrary, a switching route from one of the AP#1-AP#3 to the base station A becomes the access candidate route to the base station 4. Similarly to the terminal ID1, the terminal ID2 may be also connected to one of the AP#1-AP#3, and these APs become connection candidates. Each of the terminal ID3 and the terminal ID4 may be connected to the AP#1 or the AP#2, and these APs become the connection candidates. Each of the terminal ID5 and the terminal ID6 may be connected to the AP#2 or the AP#3, and these APs become the connection candidates.

Also, each of the terminal ID7, the terminal ID10 and the terminal ID11 may be connected to the AP#2, the AP#3 or the AP#4, and these APs become the connection candidates. Each of the terminal ID8 and the terminal ID9 may be connected to the AP#3 or the AP#4, and these APs become the connection candidates. Then, the terminal ID12 may be connected to the AP#4 alone, and the AP#4 becomes the connection candidate.

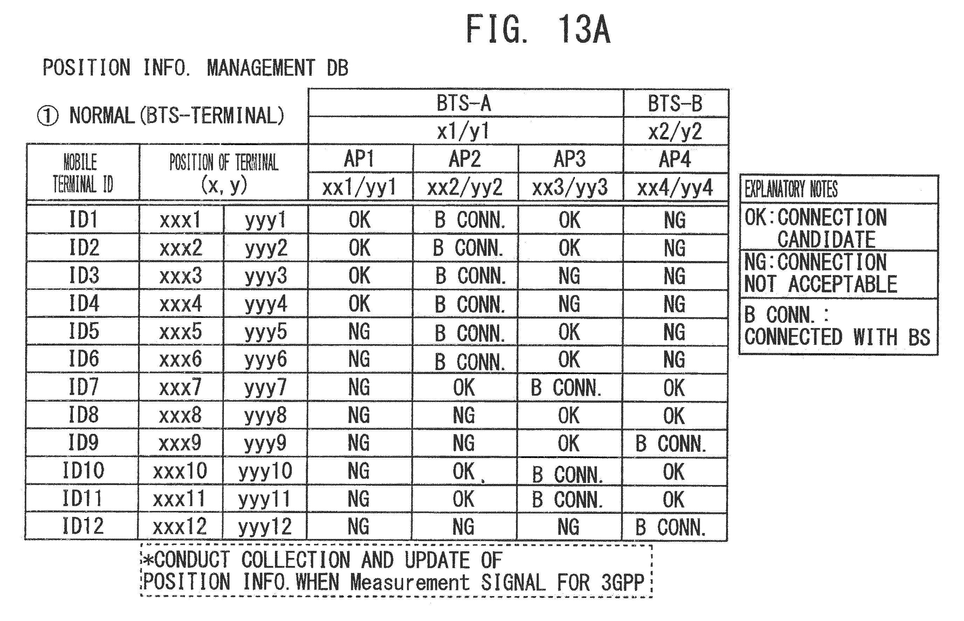

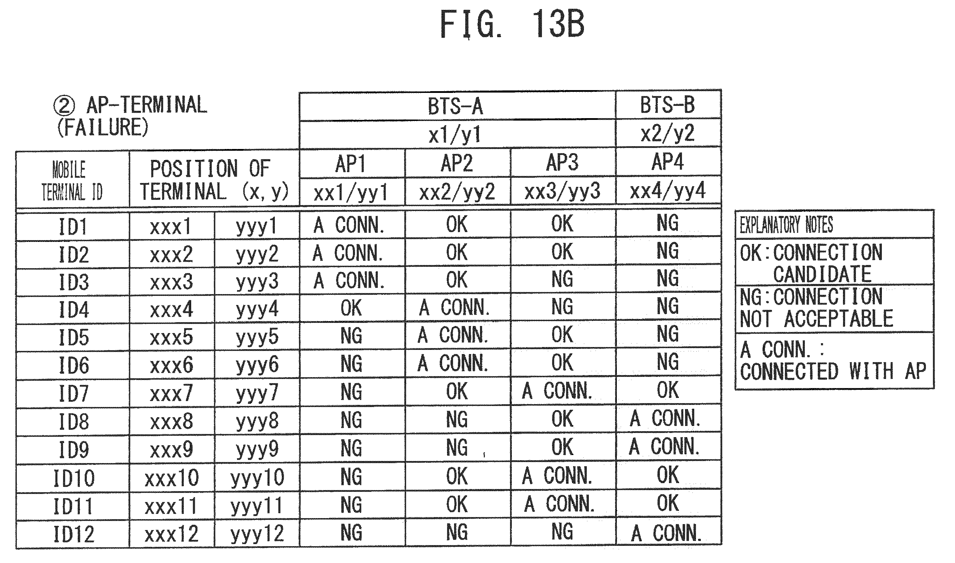

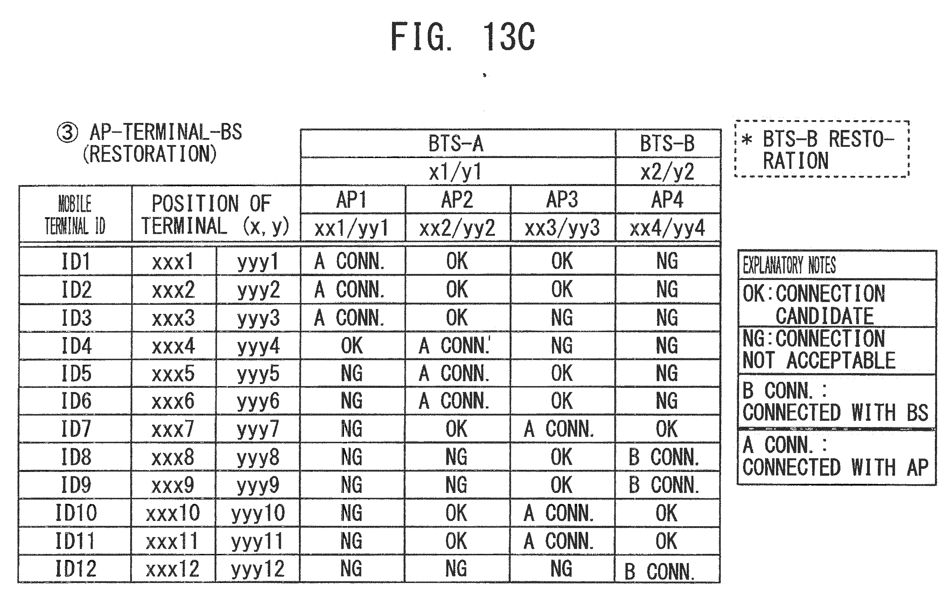

FIG. 13A illustrates a stored content example of the position information management DB 721 at normal time, FIG. 13B illustrates a stored content example of the position information management DB 721 when a disaster occurs (or during a failure), and FIG. 13C illustrates a stored content example of the position information management DB 721 at the time of the restoration.

In the examples illustrated in FIG. 13A, FIG. 13B and FIG. 13C, in the position information management DB 721, a table indicating propriety of the connection to one or more APs 10 corresponding to the base station 4, corresponding to the terminal ID and terminal position (x/y coordinates) of the terminal 5, is stored. Also, in the table, identifiers (base station ID, AP-ID) of the base station (BTS) 4 and the AP 10 are stored. As one AP-ID, the address of the AP 10 is included.

As illustrated in FIG. 13A, FIG. 13B and FIG. 13C, on the basis of a positional relation illustrated in FIG. 12, the base station A (BTS-A) corresponds to the AP#1 (AP1), the AP#2(AP2) and the AP#3(AP3). Also, the base station B (BTS-B) corresponds to the AP#4 (AP4). Also, in the example in FIG. 13A, in the table, "OK", "NG", "B connection", and "A connection" are registered as statuses (states) indicating the correspondence relation between the terminal 5 and the AP 10.

Here, the state "OK" indicates that the AP 10 or the base station 4 becomes the connection candidate when the AP is released regarding the terminal 5. On the contrary, the state "NG" indicates that the AP 10 or the base station 4 does not become the connection candidate (unconnectable) when the AP is released regarding the terminal 5. Also, the state "B connection" indicates the base station 4 to which the terminal 5 is connected, and is registered for the AP nearest to the base station 4 among one or more APs 10 corresponding to the base station 4 (for which a communication range with the terminal 5 overlaps or coincides with the cell of the base station 4).

For example, in contents illustrated in FIG. 13A, the terminal ID1-the terminal ID6 are connected to the base station A, and the state "B connection" indicating the connection with the base station A is registered for the AP#2 which is the AP 10 nearest to the base station A. The AP 10 for which the state "B connection" is registered naturally becomes the connection candidate regarding the corresponding terminal 5. In other words, the state "B connection" indicates that the connection is "OK" for the corresponding terminal 5, and indicates that the AP release instruction is to be transmitted preferentially to the AP 10. That is, for the terminal ID1-the terminal ID6, it is indicated that the AP release instruction for accepting the terminal ID1-the terminal ID6 is to be transmitted to the AP#2. Also, the state "A connection" (see FIG. 13B, FIG. 13C) indicates the AP 10 to which the terminal 5 is connected, and indicates that the connection is OK (it is the connection candidate) for the base station 4 corresponding to the AP 10. In this way, for the individual terminals 5 connected to the individual base stations 4, mapping to the individual APs 10 is executed.

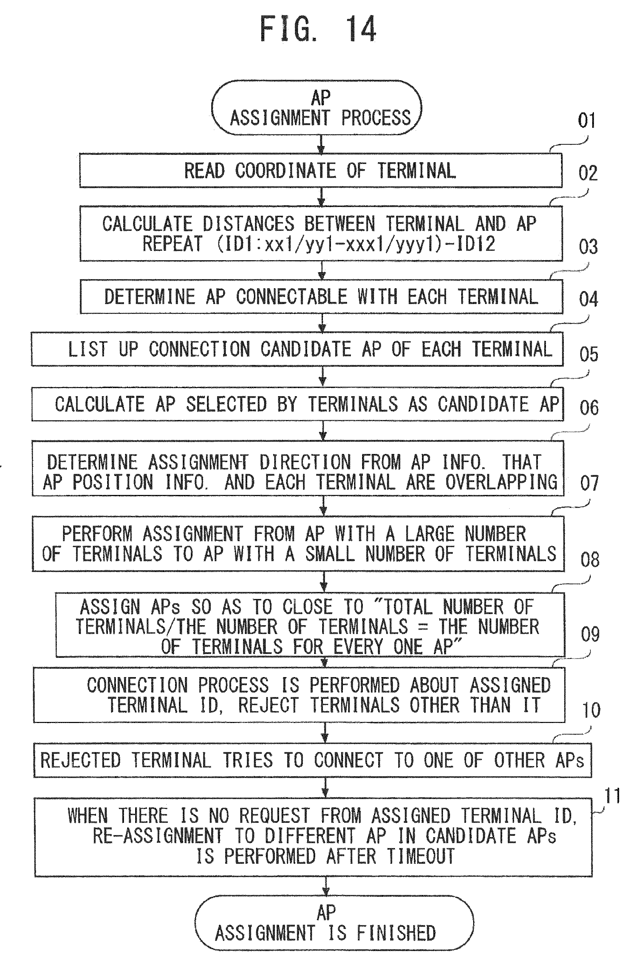

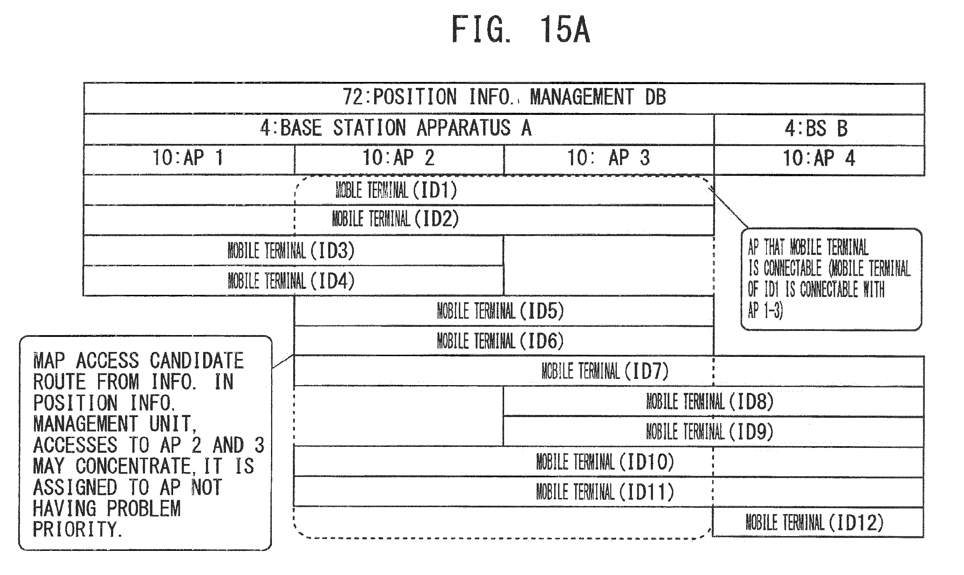

FIG. 14 is a flowchart illustrating detail of the AP assignment process. Also, FIG. 15A to FIG. 15D are explanatory drawings of the AP assignment process. The AP assignment process illustrated in FIG. 14 is executed by the controller 73 (CPU 731). The AP assignment process is started in the case that the disaster server 7 receives an emergency call, for example. In FIG. 14, first, the controller 73 reads (loads) a coordinate table (ID"1": (xxx1,yyy1) - ID"12": (xxx12,yyy12)) of the terminals 5 stored in the position information management DB 721 to a work area (for example, the SDRAM 732) (01).

Next, the controller 73 reads (loads) the position information (coordinates) of the individual APs 10 from the AP information DB 722 to the work area, and calculates distances between the individual terminals 5 (ID"1"-ID"12) and the individual APs 10 (AP#1-AP#4) using the coordinates of the individual terminals 5 and the coordinates of the individual APs 10 (02).

Next, the controller 73 determines the AP 10 connectable to the individual terminals 5 from calculation results in 02 (03). For example, by prior radio wave measurement (experiment), a distance at which the terminal 5 may receive the radio waves from the individual APs 10 (AP#1-AP#4) is obtained as a threshold. The threshold is stored beforehand in the flash ROM 734, for example. As a result, as illustrated in FIG. 12, the correspondence relation (the connection candidate route when the AP is released) based on the positions of the base stations A and B, the APs #1-#10, and the terminal ID1-the terminal ID12 is determined. Further, a table having the contents illustrated in FIG. 13A is created.

Next, the controller 73 lists up the APs to be the connection candidates of the individual terminals 5 on the basis of a determination result of 03 (04). Then, the controller 73 calculates the AP 10 which is turned to the connection candidate regarding the plurality of terminals 5 (05). Thus, the AP 10 at which the terminals 5 are to be concentrated is predicted.

FIG. 15A illustrates the processes of 04 and 05. In the case that the relation of the connection candidates between the individual terminals ID1-ID12 and the individual APs #1-#4 is the contents illustrated in FIG. 13A, the relation may be schematically illustrated as illustrated in FIG. 15A. As illustrated in FIG. 15A, the connection candidates of the terminal ID1-the terminal ID12 include the AP#2 or the AP#3 except for the terminal ID12, and the terminal ID1-the terminal ID11 are concentrated at the AP#2 and the AP#3. Therefore, by the processes after 06, the connection candidates are averaged.

Next, the controller 73 determines an assigning direction of the terminals on the basis of the AP position information (the coordinates of the individual APs) and the information of the AP redundantly selected as the connection candidate from the plurality of terminals 5 (06). The assigning direction indicates whether to assign the individual terminals in a direction of the AP#1→the AP#4 or in a direction of the AP#4→the AP#1.

Next, the controller 73 performs assignment from the AP 10 selected as the connection destination candidate of the terminal 5 most often to the AP selected least often (07). Then, the controller 73 assigns the terminals 5 so as to equalize the connection (scheduled) numbers of the terminals 5 to the individual APs 10, that is, to be close to "the number of the terminals 5 connected to one AP 10=the total number of the terminals/the number of the APs" (08).

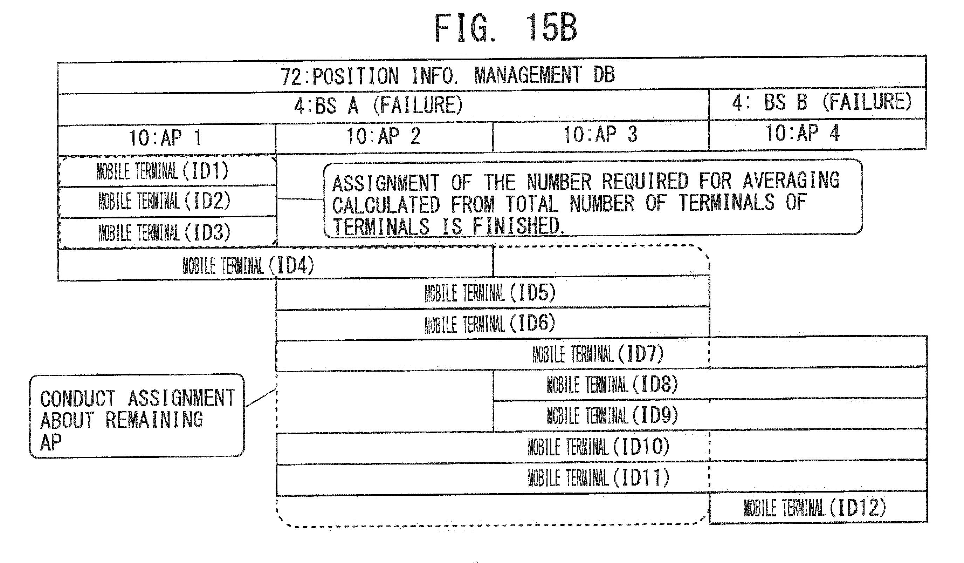

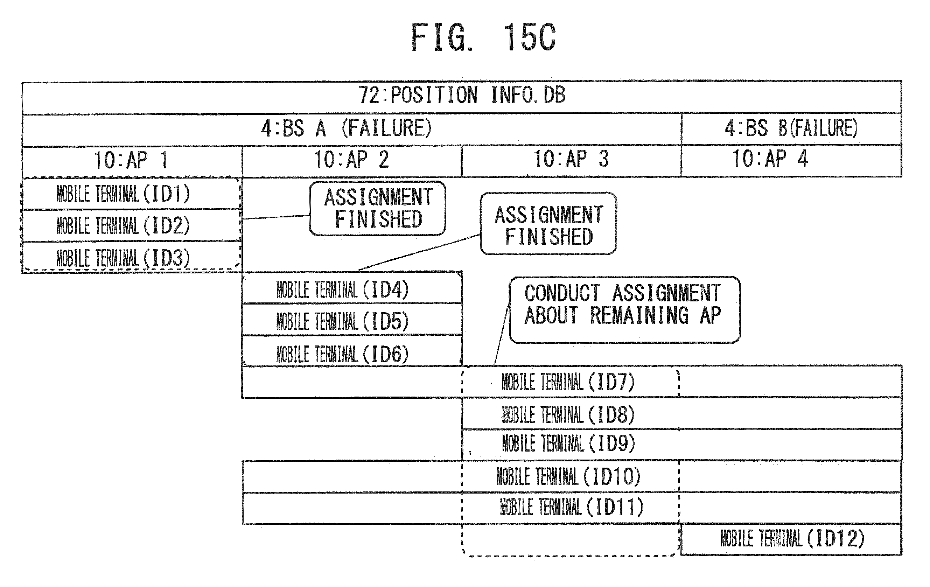

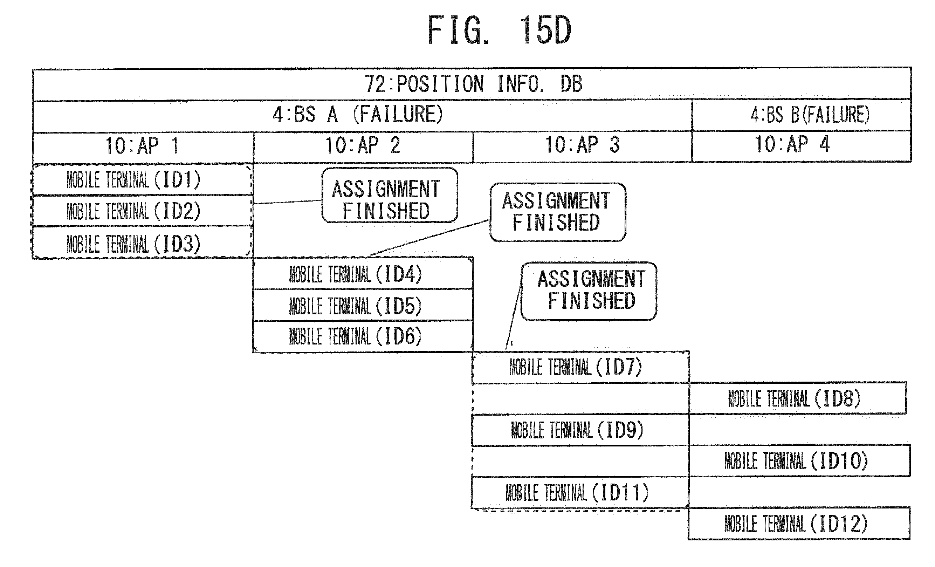

The processes of 06-08 will be described using FIG. 15B, FIG. 15C, and FIG. 15D. In the state of FIG. 15A, the controller 73 determines the assigning direction to be the AP#1→the AP#4, for example. Then, the APs to be the connection destinations of the individual terminals ID1-ID12 are determined in the order of the AP#1→the AP#2→the AP#3→the AP#4. At the time, the total number "12" of the terminals 5 is taken into consideration, and the connection destinations for the individual terminals ID1-ID12 are determined so that three terminals 5 each are assigned to the individual AP#1-AP#4.

As illustrated in FIG. 15B, for the terminals ID1-ID3, the connection to the AP#1 overlapping with the AP#2 is determined. Next, as illustrated in FIG. 15C, for the terminal ID4, on the basis of an average value "3" of the number of the terminals per AP, the AP#2 is determined as the connection destination. Also, as the remaining terminals to be connected to the AP#2, the terminals ID5 and ID6 are determined. Then, the terminals of the connection destinations are determined so that the remaining terminals ID7-ID12 are equally assigned to the remaining AP#3 and AP#4. As a result, as illustrated in FIG. 15D, the AP#3 is determined as the connection destination of the terminal ID7, the terminal ID9, and the terminal ID 11, and the AP#4 is determined as the connection destination of the terminal ID8, the terminal ID10, and the terminal ID12.

The above-described processes of 01-08 correspond to a mapping process before disaster occurrence in the first embodiment. An assignment result prepared in the processes of 01-08 becomes the contents illustrated in FIG. 15C. By using such an assignment result (assignment prediction), the AP release instruction for the connection of the individual terminals ID1-ID12 is transmitted to the individual AP#1-AP#4. The following 09 and thereafter are the processes in the AP 10 or the terminal 5 after the AP release instruction is transmitted to the individual AP#1-AP#4 according to the assignment prediction.

In 09 in FIG. 14, the AP 10 executes the connection process of the terminal 5 in the case of receiving the connection request (line establishment request) from the terminal 5 including the SSID for the AP release and the terminal ID notified from the disaster server 7, and rejects (rejects) the connection request from the terminal 5 having the terminal ID other than the notified terminal ID. The terminal 5 rejected in 09 tries the connection to another AP 10 (10). For example, the terminal ID1 is in an environment of being capable of receiving the radio waves of the AP#1 and the AP#2. In the case that the terminal ID1 transmits the line connection request to the AP#2, the AP#2 rejects the line connection request since the terminal ID of the terminal ID1 has not been received. Therefore, the terminal ID1 transmits the line connection request to the AP#1 which is another AP 10.

In 11 in FIG. 14, the AP 10 activates a predetermined timer with the reception of the AP release instruction as a trigger. In the case that the line establishment request from the terminal 5 specified by the AP release instruction is received before the timer expires, the line with the terminal 5 is established. In contrast, in the case that the timer expires, the AP 10 sends the terminal confirmation impossibility notice to the disaster server 7. In the disaster server 7, the terminal confirmation impossibility notice is received, the table (FIG. 13A) is referred to, and the AP release instruction specifying another connection candidate (AP 10) related to the terminal 5 is transmitted to another AP 10 corresponding to the next connection destination. Another AP 10 performs the above-described process of 09, and establishes the line with the terminal 5 with the line establishment request of the terminal 5 as a trigger. Also, the processes of 08-11 are looped until the line between the terminal 5 and the AP 10 is established or there is no more AP 10 of the connection destination.

Regarding the process of 011, instead of the above-described configuration, the following configuration (modification) may be also applied. That is, the controller 73 of the disaster server 7 activates the predetermined timer with notification of the terminal ID to the AP 10 as a trigger for example. In the case that the position information data of the corresponding terminal 5 is registered from the AP 10 to the position information registration DB 721 for example before the timer expires, it is determined that the terminal 5 is normally connected to the AP 10 of the connection candidate. In contrast, in the case that the timer expires without the position information being registered, the controller 73 assigns the terminal 5 to another AP 10. Then, the AP release including the terminal ID of the terminal 5 is notified to another AP 10. In the modification, the disaster server 7 determines a result of the line establishment related to the AP release instruction using the timer. Therefore, the transmission of the terminal confirmation impossibility notice may be omitted.

As above, in the case that all the terminals 5 scheduled to be switched are connected with the corresponding APs 10, the processes in FIG. 14 are ended. FIG. 13B illustrates a mapping result of the individual terminals 5 to the APs 10 in a disaster. That is, FIG. 13B illustrates table contents after performing the assignment process in FIG. 14 using the assignment result illustrated in FIG. 15D.

In FIG. 13B, the terminals ID1-ID7 and the terminal ID11 are connected to the corresponding APs 10 according to the determination result of the connection destinations illustrated in FIG. 15D. In contrast, the terminal ID9 is connected to the AP#4 which is another AP 10 as a result of being incapable of being connected to the AP#3 that is a scheduled connection destination. Also, the terminal ID10 is connected to the AP#3 which is another AP 10 as a result of being incapable of being connected to the AP#4 that is the scheduled connection destination.

FIG. 13C illustrates the connection state at the time of the restoration from a failure of the base station B (BTS-B) (when terminal accommodation by the base station B is restarted). By the disaster server 7 sending the AP restoration instruction and the release SSID invalidation notice to the AP#4, the AP#4 disconnects the connection (line) with the terminal ID8, the terminal ID9 and the terminal ID12 that are subordinate. Thus, the terminal ID8, the terminal ID9 and the terminal ID12 are respectively connected to the base station B. Thus, in FIG. 13C, as the correspondence relation of each of the terminal ID8, the terminal ID9 and the terminal ID12 to the AP#4, the state "B connection" is stored. Also, when the base station A (BTS-A) is restored, the remaining terminals 5 may be also returned to the connection of the base station A or the base station B, and returned to the state at normal time.

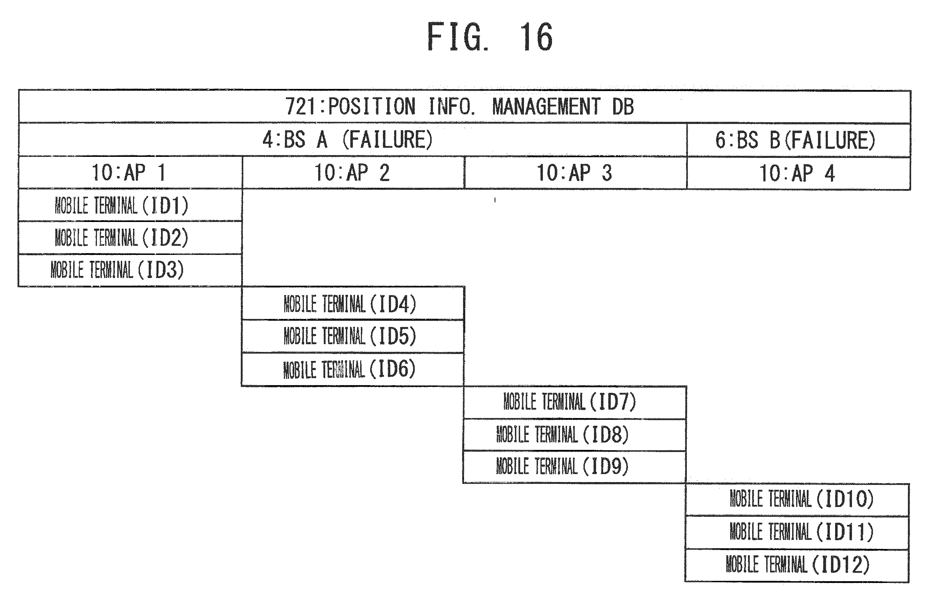

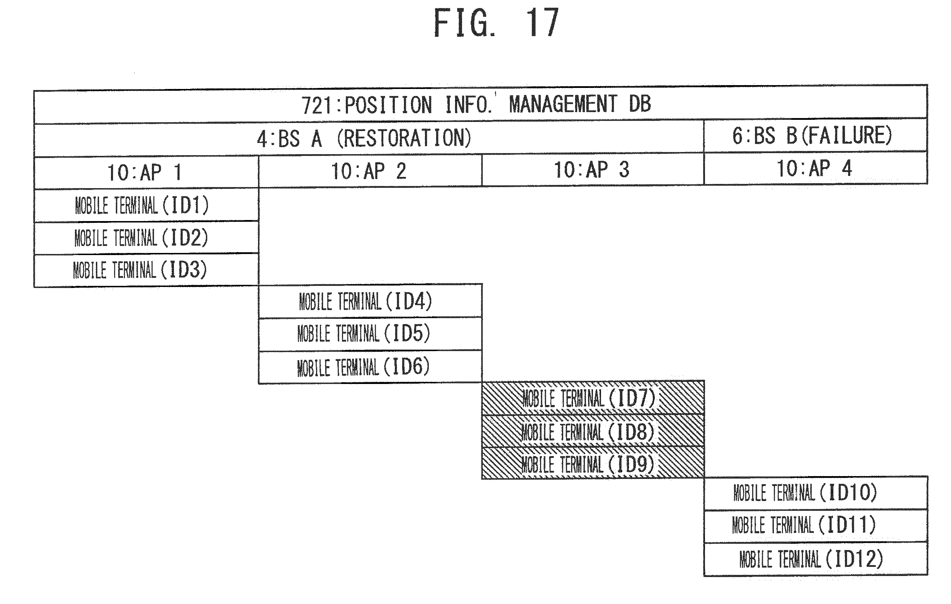

FIG. 16 illustrates another example of the assignment state to the AP#1-AP#4 of the individual terminals 5 (ID"1"-"12") stored in the position information management DB 721 during a fault (failure) of the base stations A and B, and FIG. 17 illustrates the state when the base station A is restored from the state illustrated in FIG. 16. In the examples in FIG. 16 and FIG. 17, an example that the terminal ID7, the terminal ID8 and the terminal ID9 connected to the AP#3 during the failure are returned to the original state of being connected to the base station A is illustrated.

### <Effects of embodiments>

The wireless communication system described in the first and second embodiments includes the disaster server 7 capable of recognizing the distribution of the APs 10 and the terminals 5 beforehand from the position information of the base station 4 and assigning the terminals 5 to the predetermined APs 10. The disaster server 7 is one example of a server. In the embodiment, the SSID for the AP release is supplied to the terminal 5 connected to the base station 4 with the generation of an emergency call as a trigger. On the other hand, the disaster server 7 gives the SSID for the AP release and the terminal ID of the terminal 5 to the AP 10 which is the connection destination candidate of the terminal 5. Thus, the AP 10 establishes the line with the terminal 5 with the reception of the line connection request including the SSID for the AP release and the terminal ID of the terminal 5 itself transmitted from the terminal 5 as a trigger. Thus, the connection destination of the terminal 5 is switched from the base station 4 to the AP 10 which is present near (whose communication area overlaps with) the base station 4.

Therefore, under the situation that a failure or congestion may occur in the base station 4 due to a disaster or an accident or the like, alternative communication means may be provided without making users be conscious. Also, by reducing the number of the terminals connected to the base station 4, the congestion of the base station 4 may be avoided. Also, the disaster server 7 assigns the plurality of terminals 5 to the plurality of APs 10 so as not to generate a deviation among the APs regarding the plurality of terminals 5 to be separated from the base station 4. Thus, the individual terminals 5 may secure predetermined communication quality at the AP 10 of the connection destination, and the occurrence of the congestion in the APs 10 may be avoided.

Also, in the embodiment, a connection change from the base station 4 to the AP 10 of the terminal 5 and a connection change from the AP 10 to the base station 4 are controlled through the AP release instruction, the AP restoration instruction and the release SSID invalidation notice by the disaster server 7. Through the AP release and restoration instructions, temporary stoppage of the charging process related to the wireless LAN utilization of the terminal using the SSID for the AP release and the cancellation of the temporary stoppage in the provider 9 (charging server) may be automatically executed. In other words, regarding the utilization of the released AP 10 (wireless LAN), conduct of a special operation for stopping charging by a user may be avoided. Also, by cancelling the temporary stoppage of the charging process using the AP restoration instruction, a period during which the utilization of the AP 10 is released for free may be shortened (the charging process may be restarted at the point of time when there is no more need for free release).

Further, in the embodiment, the disaster server 7 includes the Web function 71 for operating its own Web site that may be operated with a small amount of data, and the AP 10 is controlled such that the access to the Web site alone is made possible in a disaster. The disaster server 7 may suppress an amount of data communication by permitting the Web access to its own Web site (information exchange service site) alone.

Thus, while the line connection state may be provided for more users, the users of the terminals 5 may execute information exchange for the safety confirmation or the like using the information exchange service site. Also, by providing such an information exchange service site, safety confirmation means suitable for communication resources secured in a disaster may be provided.

In other words, conventionally, when a disaster occurs, there is no guarantee that a line is established even when the user (terminal 5) disconnected from the base station 4 tries the connection to the wireless LAN, and there is no guarantee that communication for excellent safety confirmation may be executed even when the line is established. In contrast, according to the present embodiment, since the AP 10 enables the utilization of its own information exchange service site alone, the terminal 5 may secure a communication band at a high probability, and execute the information exchange (information transmission, information acquisition) for the safety confirmation or the like under a proper environment regarding transmission and reception of information through the information exchange service site.

Also, in the embodiment, the user (terminal 5) is managed in units of the access point device. Therefore, a community in a specific area is easily constructed, and means for broadcasting needed information in units of the access point device may be provided.

### Explanations of letters or numerals

4...base station, 5... mobile terminal, 7... server apparatus for disasters (server), 10... access point apparatus, 721A... position information DB (storage), 731... CPU

## Claims

1. A wireless communication system, comprising:
a base station to which a terminal is connected, an access point of a wireless LAN connected with the terminal instead of the base station when sending an emergency call, and a server,
the base station supplying first information to be used for acceptance by the access point to the terminal connected to the station according to the sending of the emergency call,
the server including a storage device that stores a correspondence relation between the terminal connected to the base station and the access point, and a controller that executes a process of transmitting an acceptance instruction of the terminal including the first information to the access point based on the correspondence relation according to the sending of the emergency call, and
the access point performing a connection process with the terminal as one of conditions that the first information included in the acceptance instruction is coincident with the first information received from the terminal.

2. The wireless communication system according to claim 1, wherein the controller of the server generates the correspondence relation by performing an assignment process of assigning individual terminals to individual access points using information of a plurality of terminals connected to one or more base stations and information of a plurality of access points that substitute the one or more base stations.

3. The wireless communication system according to claim 2, wherein the controller performs the assignment process so as to equalize the numbers of terminals assigned to the individual access points.

4. The wireless communication system according to any one of claims 1 to 3, wherein the storage device of the server stores display data of an information exchange service site which is a Web site created so that an amount of data communicated between the access point and the terminal is settled within a given range upon utilization,
wherein the access point or the terminal becomes a state of denying access to the Web site other than the information exchange service site, and
wherein the controller of the server performs a process of providing the terminal with an information exchange service by the information exchange service site, including a process of transmitting the display data to the terminal, according to access to the information exchange service site from the terminal connected to the access point.

5. The wireless communication system according to any one of claims 1 to 4, wherein the base station supplies second information included in the emergency call to a terminal connected to the station, and
wherein the controller of the server performs a process of transmitting the second information included in the emergency call to the terminal through the access point when the emergency call is received in the server.

6. The wireless communication system according to any one of claims 1 to 5, wherein the controller of the server performs a force-out process for the terminal of transmitting a force-out instruction including an invalidation notice of the first information to the access point when a condition for reconnecting the terminal connected to the access point to the base station is satisfied.

7. The wireless communication system according to claim 6, wherein the controller of the server executes the force-out process for the terminal by an access point unit in the case that there are a plurality of access points to which the plurality of terminals are connected.

8. The wireless communication system according to claim 6 or 7, wherein the storage device of the server stores position information of the terminal connected to the base station,
wherein the position information of the terminal is updated according to a position registration process to the base station of the terminal, and
wherein the condition is that an updating situation of the position information of the base station to the storage device becomes normal under a situation that the terminal is connected to the access point.

9. A server, comprising:
a storage device that stores a correspondence relation between a terminal connected to a base station and an access point connectable with the terminal instead of the base station; and
a controller that executes a process of transmitting an instruction to accept the terminal including information used for determining propriety of connection with the terminal at the access point to the access point based on the correspondence relation according to sending of the emergency call.

10. The server according to claim 9, wherein the controller generates the correspondence relation by performing an assignment process of assigning individual terminals to individual access points using information of a plurality of terminals connected to one or more base stations and information of a plurality of access points that substitute the one or more base stations.

11. The server according to claim 10, wherein the controller performs the assignment process so as to equalize the numbers of terminals assigned to the individual access points.

12. The server according to any one of claims 9 to 11, wherein the storage device of the server stores display data of an information exchange service site which is a Web site created so that an amount of data communicated between the access point and the terminal is settled within a predetermined range upon utilization, and
wherein the controller of the server performs a process of providing the terminal with an information exchange service by the information exchange service site, including a process of transmitting the display data to the terminal, according to access to the information exchange service site from the terminal connected to the access point.

13. The server according to any one of claims 9 to 12, wherein the controller performs a process of storing position information received from the terminal connected to the access point in the storage device, and a process of transmitting the second information included in the emergency call to the terminal through the access point when the emergency call is received in the server.

14. The server according to any one of claims 9 to 13, wherein the controller performs a force-out process for the terminal of transmitting a force-out instruction including an invalidation notice of the first information to the access point when a condition for reconnecting the terminal connected to the access point to the base station is satisfied.

15. The server according to claim 14, wherein the controller executes the force-out process for the terminal by an access point unit in the case that there are a plurality of access points to which the plurality of terminals are connected.

16. The server according to claim 14 or 15, wherein the storage device of the server stores position information of the terminal connected to the base station,
wherein the position information of the terminal is updated according to a position registration process to the base station of the terminal, and
wherein the condition is that an updating situation of the position information of the base station to the storage device becomes normal under a situation that the terminal is connected to the access point.

17. An access point, comprising:
a communication device that receives information used for determining propriety of connection with a terminal requesting the connection instead of a base station from a server when sending an emergency call; and
a controller that performs, when a connection request from the terminal is received, a connection process with the terminal on condition that information included in the connection request is coincident with information received from the server.

18. The access point according to claim 17, wherein the controller denies an access request of the terminal to a Web site other than an information exchange service site which is a Web site provided for the terminal by the server after the connection with the terminal.

19. The access point according to claim 17 or 18, wherein the controller performs a process of transmitting position information from the terminal to the server, and a process of transferring information included in an emergency call, which is transmitted from the server using the position information, to the terminal.

20. The access point according to any one of claims 17 to 19, wherein the controller disconnects connection with the terminal based on a force-out instruction including an invalidation notice of the information, which is received from the server when a condition for reconnecting the terminal connected to the access point to the base station is satisfied.

21. A terminal assignment method, comprising:
a controller of a server storing, in a storage device, a correspondence relation between a terminal connected to a base station and an access point connectable with the terminal instead of the base station; and
the controller of the server executing a process of transmitting an instruction to accept the terminal including information used for determining propriety of connection with the terminal at the access point to the access point based on the correspondence relation according to sending of the emergency call.

22. The terminal assignment method according to claim 21, wherein the controller generates the correspondence relation by performing an assignment process of assigning individual terminals to individual access points using information of a plurality of terminals connected to one or more base stations and information of a plurality of access points that substitute the one or more base stations.

23. The terminal assignment method according to claim 22, wherein the controller performs the assignment process so as to equalize the numbers of terminals assigned to the individual access points.
